Europäisches Patentamt

European Patent Office

Office européen des brevets

(19)

(11) **EP 0 738 873 B1**

(12) **FASCICULE DE BREVET EUROPEEN**

(45) Date de publication et mention
de la délivrance du brevet:
**29.09.1999   Bulletin 1999/39**

(51) Int Cl.⁶: **G01C 19/72**

(21) Numéro de dépôt: 96400816.3

(22) Date de dépôt: 17.04.1996

(54) **Gyroscope à fibre optique multi-axe**

Mehrachsiger faseroptischer Kreisel

Multi-axis optical fibre gyroscope

(84) Etats contractants désignés:
DE FR GB

(30) Priorité: 18.04.1995  FR 9504601

(43) Date de publication de la demande:
23.10.1996   Bulletin 1996/43

(73) Titulaire: **PHOTONETICS**
**78160 Marly le Roi (FR)**

(72) Inventeurs:
• **Martin, Philippe**
**78160 Pontchartrain (FR)**
• **Gaiffe, Thierry**
**75009 Paris (FR)**
• **Morisse, Joel**
**91400 Saclay (FR)**
• **Simonpietri, Pascal**
**95350 Saint-Brice-Sous-Forêt (FR)**
• **Lefevre, Hervé**
**75014 Paris (FR)**

(74) Mandataire: **Michelet, Alain et al**
**Cabinet Harlé et Phélip**
**7, rue de Madrid**
**75008 Paris (FR)**

(56) Documents cités:
EP-A- 0 460 675      EP-A- 0 504 820
FR-A- 2 605 101      US-A- 5 184 195
US-A- 5 189 488

## Description

L'invention concerne un procédé permettant la mesure de vitesses de rotation par rapport à plusieurs axes, ainsi qu'un gyroscope interférométrique à fibre optique mettant en oeuvre ce procédé.

Les systèmes de navigation, guidage ou stabilisation utilisent généralement plusieurs axes de mesure de rotation : deux axes orthogonaux dans la cas d'une stabilisation d'une ligne de visée, trois axes orthogonaux dans le cas de la navigation et du guidage, quatre et plus quand une redondance est recherchée. Trois axes sont nécessaires pour mesurer la position angulaire d'un mobile. De tels systèmes peuvent utiliser des gyroscopes optiques indépendants comportant chacun une source et un récepteur. Ces dispositifs sont bien connus et il suffit d'en placer plusieurs pour rendre possible les mesures souhaitées.

Cependant, pour des raisons de coûts, de compacité et de fiabilité, il est intéressant de réduire le nombre de composants. Pour ce faire, plusieurs éléments peuvent être mis en commun entre les moyens de mesure selon différents axes. Plusieurs gyroscopes permettant la mesure de vitesse de rotation par rapport à plusieurs axes dits "gyroscopes multi-axe" ont ainsi été proposés. Ces gyroscopes comprennent des interféromètres en anneau de Sagnac pour chaque direction de mesure, mais peuvent utiliser une même source lumineuse, un même photodétecteur ou une même unité électronique de traitement.

L'interféromètre de Sagnac et le phénomène physique qu'il met en jeu, sont bien connus.

Dans un tel interféromètre, une lame séparatrice ou autre dispositif séparateur divise une onde incidente. Les deux ondes contrapropagatives ainsi créées se propagent en sens opposé, le long d'un chemin optique fermé, se recombinent et produisent des interférences qui dépendent de la différence de phase entre les ondes lors de leur recombinaison. A l'origine, le chemin optique fermé des interféromètres de Sagnac était défini par des miroirs. Il est maintenu connu qu'il peut être constitué par une bobine multi-tour de fibre optique monomode.

Il est également connu que certains phénomènes physiques sont susceptibles de produire des perturbations, particulièrement des déphasages non réciproques sur les ondes contrapropagatives engendrant des différences de phases relatives entre ces ondes qui modifient leur état d'interférence lors de leur recombinaison.

La mesure de la différence de phase relative permet de quantifier le phénomène qui l'a engendrée. Le principal phénomène physique susceptible de créer ces perturbations non réciproques est l'effet Sagnac produit par la rotation de l'interféromètre par rapport à un axe perpendiculaire au plan de son chemin optique fermé. L'effet Faraday ou effet magnéto-optique colinéaire est également connu comme produisant des effets non réciproques de ce type. D'autres effets peuvent dans certaines conditions produire également une différence de phase non réciproque. Au contraire, les variations de nombreux paramètres représentatifs de l'environnement qui sont souvent à l'origine de perturbation des mesures, n'ont que des effets réciproques sur l'interféromètre de Sagnac, ne perturbent pas la différence de phase relative entre les ondes contrapropagatives et n'ont donc pas d'influence sur la mesure du paramètre étudié. Tel est le cas des variations lentes de température, d'indice, etc..., qui modifient le chemin optique parcouru par les ondes, mais le modifient de manière réciproque.

De nombreux travaux ont été menés afin d'améliorer la sensibilité et la précision des mesures pouvant être réalisées avec un tel appareil de mesure. On pourra, par exemple, consulter sur ce sujet l'ouvrage "The Fiber Optic Gyroscope", Artech House de Hervé C. LEFEVRE, 1993.

Différents modes de traitement des signaux ont été proposés en présence d'un unique interféromètre de Sagnac. La réponse fournie par ce dernier, donnée par la puissance P d'interférence en fonction d'une différence de phase $\delta\Phi$ et de la forme $P = P_0 (1 + \cos \delta\Phi)$. $P_0$ est la puissance maximale d'interférence obtenue par un effet additif des ondes contrapropagatives en l'absence de déphasage. Or, la sensibilité de ce signal au voisinage de la différence de phase $\delta\Phi=0$ est faible. Pour remédier à cette situation, il a été proposé d'introduire une modulation carrée de la différence de phase $\delta\Phi m$ qui déplace le point de fonctionnement et produit un signal périodique dont l'amplitude est une fonction sinusoïdale du paramètre mesuré et que l'on peut exploiter avec une plus grande sensibilité et stabilité.

Cette différence de phase $\delta\Phi_m$, dite différence de phase de mise au biais, a typiquement pour amplitude $\pi/2$. Pour la produire, un modulateur de phase est usuellement placé à l'une des extrémités de la bobine multi-tour de l'interféromètre et commandé par un signal $V_m$. Ce signal $V_m$ génère, sur chacune des ondes, un déphasage $\Phi_m$ qui produit une différence de phase entre les ondes contrapropagatives :

$$\delta\Phi_m (t) = \Phi_m (t) - \Phi_m (t - \tau)$$

où t est le temps et $\tau$ la durée de transit de l'une des ondes dans la bobine.

Il a ensuite été montré que la précision de la mesure est améliorée par l'utilisation d'une méthode de zéro, également appelée "fonctionnement en boucle fermée". Selon cette méthode, une différence de phase supplémentaire dite "de contre-réaction" $\delta\Phi_{cr}$ est appliquée et sert à compenser la différence $\delta\Phi_s$ produite par le paramètre mesuré et appelée effet Sagnac. La somme de ces deux différences de phase $\delta\Phi_{cr}$ et $\delta\Phi_s$ est maintenue nulle, ce qui permet de faire fonctionner l'interféromètre avec la sensibilité maximale. La mesure est réalisée par l'exploitation du signal nécessaire à la production de la différence de phase de contre-réaction $\delta\Phi_{cr}$. Ainsi, la mesure est-elle stable et linéaire.

La différence de phase commandée $\delta\Phi_c$ est produite par le modulateur de phase commandé par un signal $V_c$. Ce signal $V_c$ génère, sur chacune des ondes, un déphasage $\Phi_c$ qui produit une différence de phase $\delta\Phi_c$ entre les ondes contrapropagatives :

$$\delta\Phi_c(t) = \Phi_c(t) - \Phi_c(t - \tau)$$

Le déphasage de modulation $\Phi_c$ comporte une composante de contre-réaction $\delta\Phi_{cr}$. Il comporte donc également une composante de mise au biais $\Phi_m$ de période égale à la période de modulation $T_m$. Cette composante de mise au biais $\Phi_m$ est généralement elle-même la somme d'un terme d'oscillation $\Phi_o$ et d'un terme de décalage constant $\Phi_d$, la valeur du terme d'oscillation $\Phi_o$ à un instant t étant opposée à celle à l'instant $t + T_m/2$.

En présence de plusieurs axes de mesure, selon une approche connue de réalisation d'un gyroscope multi-axe, une unique source lumineuse est utilisée. Il s'agit, en effet, d'un des éléments les plus coûteux, ainsi que de celui consommant le plus d'énergie. La lumière émise par cette source peut alors être partagée de façon permanente avec, par exemple, des séparateurs de faisceaux ou des coupleurs. On parle ainsi d'un "partage de source". A chaque interféromètre, sont usuellement associés un détecteur et une unité électronique de traitement du signal.

Le partage de source est réalisé, par exemple, par un coupleur à fibre 3 x 3 dont un des trois bras d'entrée est connecté à la source commune. Chacun des bras de sortie du coupleur 3 x 3 est relié à l'un des trois interféromètres par l'intermédiaire d'un coupleur à fibre 2 x 2, le second bras d'entrée du coupleur 2 x 2 étant connecté à un détecteur.

Il a aussi été proposé de multiplexer les signaux produits par les interféromètres en utilisant des commutateurs optiques. Ces derniers sont placés de telle sorte qu'à tout instant, il soit possible de relier un et un seul des trois interféromètres à la source et un autre au photodétecteur. La durée de transit d'une onde dans un quelconque des trois interféromètres étant égale à $\tau$, le fonctionnement du gyroscope repose sur un cycle temporel d'une durée égale à $3\tau$. Cette dernière durée est ainsi partagée en trois phases de durées respectives égales à $\tau$.

Pendant la première phase, le photodétecteur est relié à un premier interféromètre dont il reçoit un signal, tandis que la source est reliée à un deuxième interféromètre auquel elle envoie de la lumière.

Lors de la deuxième phase, les commutateurs relient le photodétecteur au deuxième interféromètre tandis que la source est reliée au troisième, si bien que le photodétecteur reçoit le signal précédemment envoyé par la source dans le deuxième interféromètre, tandis que la source envoie de la lumière dans le troisième interféromètre.

Pendant la troisième phase, de manière similaire, le photodétecteur est relié au troisième interféromètre, tandis que la source est reliée au premier. Le signal reçu par le photodétecteur correspond donc, successivement à chacun des trois interféromètres pendant un intervalle de temps égal à $\tau$. Cette succession est combinée avec une modulation de mise au biais de période $6\tau$ sur les trois interféromètres.

Le multiplexage temporel des trois signaux se fait ainsi par commutation.

Bien qu'il permette l'utilisation commune d'une unique source lumineuse et d'un unique photodétecteur, un tel gyroscope tri-axe est pénalisé par sa complexité technologique, liée à la présence des commutateurs optiques. D'autre part, le fait de placer des jonctions Y optiques en entrée des interféromètres pose, en présence des commutateurs, un problème de réinjection de mode antisymétrique.

Le brevet FR-2.605.101 décrit un autre gyroscope tri-axe exploitant le partage de source et le multiplexage. Les trois bobines de fibres y sont couplées en série et reliées les unes aux autres par leur milieu. En désignant par $\tau$, la durée de transit d'une onde dans un quelconque des interféromètres, un signal envoyé à la première bobine à l'instant t ne parvient à la deuxième qu'à l'instant $t + \tau$ et à la troisième à l'instant $t + 2\tau$. Le photodétecteur reçoit donc les informations en provenance des trois interféromètres, respectivement aux instants $t + \tau$, $t + 2\tau$ et $t + 3\tau$. La source doit donc envoyer un signal à une cadence d'au minimum $3\tau$, afin que les signaux de sortie ne soient pas mélangés. Comme dans la précédente réalisation, ce multiplexage est combiné avec une modulation de mise au biais de période $6\tau$, appliquée par des modulateurs aux trois interféromètres.

Ce dispositif présente l'inconvénient de donner des puissances retour relativement faibles à cause des pertes dans les coupleurs reliant les interféromètres. D'autre part, placer dans un même boîtier, de manière orthogonale, trois bobines reliées entre elles par des coupleurs, n'est pas techniquement aisé. Les fibres de connexion aux bobines rendent également le dispositif sensible au gradient de température.

Une autre solution est proposée dans le brevet européen EP-O.460.675 pour un gyroscope multi-axe mettant en commun une source et un photodétecteur pour plusieurs interféromètres.

La source est reliée à un élément de répartition optique comprenant plusieurs branches, chacune de ces branches conduisant aux deux extrémités d'un des interféromètres par l'intermédiaire d'un diviseur de faisceau. Des modulateurs de phase, placés au niveau des diviseurs de faisceau, appliquent des différences de phase à des ondes contrapropagatives parcourant les interféromètres.

Le procédé de multiplexage employé avec ce dispositif consiste à mettre alternativement en route, pour chacun des interféromètres, un signal de modulation en conservant un signal nul pour l'ensemble des autres interféromètres.

L'inconvénient majeur de cette méthode est qu'elle fait apparaître un signal parasite continu. En effet, les interférences des ondes propagatives en sortie des interféromètres génèrent une puissance maximale en l'absence de différence de phase.

Une solution évitant ce problème est décrite dans le brevet américain US-5.184.195. Ce document présente un gyroscope tri-axe comprenant une unique source et un unique photodétecteur. Les connexions entre la source, le photodétecteur et les trois interféromètres sont réalisées par un réseau de fibres optiques et de coupleurs. Des modulateurs de phase sont placés en entrée des trois interféromètres.

Ce dispositif est utilisé avec un procédé de multiplexage alternant, pour chaque interféromètre, une modulation de mesure avec une modulation d'extinction. Cette dernière est obtenue en appliquant une modulation de phase d'amplitude $\pi$ car celle-ci correspond à une opposition de phase des ondes contrapropagatives en sortie de l'interféromètre, générant une puissance nulle. Un seul des interféromètres à la fois est soumis à une modulation de mesure.

Ce procédé entraîne un problème de précision. En effet, la puissance retour reçue par le photodétecteur fluctue au cours du temps, même si les puissances issues des interféromètres sont équilibrées par le montage du gyroscope. Ceci est dû au fait que des écarts de 10 à 20 % sont toujours présents entre les différents axes, ces écarts étant amplifiés lors de la démodulation des signaux reçus. De plus, le photodétecteur étant suivi d'un réducteur de pics et d'un amplificateur, les sauts de puissance générés risquent de saturer l'amplificateur.

Un autre handicap du procédé apparaît lorsque l'on souhaite moduler à une fréquence propre des interféromètres. Si cette fréquence propre est élevée, les modulations doivent être très rapides, ce qui peut s'avérer complexe à mettre en oeuvre.

D'autre part, le dispositif décrit dans le précédent brevet est pénalisé par le fait que les coupleurs utilisés entraînent d'importantes pertes d'énergie, la puissance reçue par le photodétecteur étant très faible par rapport à celle émise par la source.

L'objet de la présente invention est un procédé de mesure de vitesses de rotation par rapport à plusieurs axes, fiable, précis et facile à mettre en oeuvre.

Elle vise également à minimiser la présence de signaux parasites, tout en optimisant l'utilisation de l'énergie fournie.

La présente invention a ainsi pour but un gyroscope interférométrique multi-axe admettant une unique source lumineuse et permettant un multiplexage temporel des signaux avec l'utilisation d'un photodétecteur et d'une unité de traitement électronique communs, sans pour autant nécessiter de commutateur.

Un autre objectif de l'invention est de réaliser un gyroscope multi-axe, peu coûteux, compact, fiable et de faible consommation énergétique.

C'est également un but de l'invention de réaliser un tel gyroscope en gardant une complexité technologique similaire à celle du partage de source.

De plus, l'invention a pour objectif de pouvoir effectuer un traitement en boucle fermée en conservant une parfaite stabilité.

A cet effet, l'invention concerne un procédé de mesure de vitesses de rotation par rapport à N axes, N étant au moins égal à 2, utilisant un gyroscope interférométrique à fibre optique. Le gyroscope comporte N interféromètres $I_i$ en anneau de Sagnac, deux ondes contrapropagatives se propageant dans chacun des interféromètres $I_i$, le temps de propagation des ondes entre leur séparation et leur recombinaison étant une durée $\tau_i$, les durées $\tau_i$ associées aux interféromètres $I_i$ étant sensiblement égales à une durée commune de transit $\tau$. Le procédé est tel que :

- on émet des signaux par une source lumineuse commune vers l'ensemble des interféromètres $I_i$,
- on détecte les signaux après traversée des interféromètres $I_i$ dans un photodétecteur commun,
- on génère par des modulateurs de phase des différences de phase de modulation commandées $\delta\Phi_{c,i}$ entre les ondes contrapropagatives se propageant dans chacun des interféromètres $I_i$,
- on commande les modulateurs, on démultiplexe et on démodule des signaux provenant du photodétecteur, et on en extrait les vitesses de rotation des interféromètres $I_i$ par une unité de traitement.

Les signaux émis par la source parviennent à l'ensemble des interféromètres $I_i$, puis au photodétecteur, de façon sensiblement simultanée.

Selon l'invention, les différences de phase de modulation commandées $\delta\Phi_{c,i}$ générées par les modulateurs, comportent des composants de mise au biais $\delta\Phi_{m,i}$ de période de modulation commune $T_m$ sensiblement égale au double $2\tau$ de la durée commune de transit $\tau$, et d'amplitude commune égale à un biais de phase non multiple de $\pi$, la valeur de chaque composante de mise au biais $\delta\Phi_{m,i}$ à un instant t étant opposée à celle de la composante à l'instant $t + T_m/2$, chaque demi-période $T_m/2$ étant divisée en au moins N intervalles de temps $\delta t_i$. D'autre part, on produit un changement de signe de la composante de mise au biais $\delta\Phi_{m,i}$ associée à chaque interféromètre Ii, au début d'un et d'un seul des intervalles de temps $\delta t_i$.

De cette façon, un signal parvenant à l'unité de traitement est affecté simultanément par des déphasages Sagnac $\delta\Phi_{s,i}$ représentatifs des vitesses de rotation de l'ensemble des interféromètres $I_i$, se rajoutant aux différences de phase de modulation $\delta\Phi_{c,i}$, les

déphasages Sagnac $\delta\Phi_{s,i}$ étant extraits par l'unité de traitement par un échantillonnage du signal sur les N intervalles de temps $\delta t_i$.

La modulation appliquée à chaque interféromètre est ainsi une modulation semblable à celle appliquée dans un gyroscope comportant un unique axe de mesure. Les modulations de mise au biais sont identiques pour l'ensemble des interféromètres du gyroscope selon l'invention, mais translatées dans le temps.

Un circuit électronique de démultiplexage et de démodulation placé en sortie du photodétecteur permet d'extraire les signaux issus des différents interféromètres $I_i$.

Un avantage de ce mode de multiplexage est que la puissance reçue par le photodétecteur en provenance des interféromètres $I_i$ est invariante.

Avantageusement, pour démultiplexer et démoduler les signaux provenant du photodétecteur, on applique par un circuit électronique de démultiplexage et de démodulation de l'unité de traitement, des signaux $D_i$ de démultiplexage et de démodulation de périodes égales à la période de modulation commune $T_m$, tels que le signal $D_i$ de démultiplexage et de démodulation associé à chacun des interféromètres $I_i$ vaut 1 sur l'intervalle de temps $\delta t_i$ de changement de signe correspondant, 0 de l'intervalle $\delta t_{i+1}$ suivant au $(N-2)^{\text{ème}}$ intervalle $\delta t_{N+i-2}$ suivant, 1 sur le $(N-1)^{\text{ème}}$ intervalle $\delta t_{N+i-1}$ suivant, -1 sur le $N^{\text{ème}}$ intervalle $\delta t_{N+i}$ suivant, 0 du $(N+1)^{\text{ème}}$ $\delta t_{N+i+1}$ au $(2N-2)^{\text{ème}}$ $\delta t_{2N+i-2}$ intervalles suivants, et -1 sur le $(2N-1)^{\text{ème}}$ intervalle $\delta t_{2N+i-1}$ intervalle suivant.

Selon un mode de réalisation proposé, on produit la différence de phase de modulation commandée $\delta\Phi_{c,i}$ générée dans chaque interféromètre $I_i$ par les modulateurs en appliquant simultanément un même déphasage de modulation commandé $\Phi_{c,i}$ aux deux ondes contrapropagatives se propageant dans l'interféromètre $I_i$. Ces ondes contrapropagatives se recombinent après un décalage temporel égal à la durée de transit $\tau$, le déphasage $\Phi_{c,i}$ déterminant la différence de phase $\delta\Phi_{c,i}$. Le déphasage de modulation $\Phi_{c,i}$ comporte une composante de mise au biais $\Phi_{m,i}$ de période égale à la période de modulation $T_m$, la composante de mise au biais $\Phi_{m,i}$ étant la somme d'un terme d'oscillation $\Phi_{o,i}$ et d'un terme de décalage constant $\Phi_{d,i}$. La valeur du terme d'oscillation $\Phi_{o,i}$ à un instant t est opposée à celle à l'instant t + $T_m/2$, le terme d'oscillation $\Phi_{o,i}$ ayant une amplitude égale à la moitié du biais de phase, et changeant de signe au début de l'intervalle de temps $\delta t_i$ correspondant à l'interféromètre $I_i$.

De préférence, le biais de phase vaut $\pi/2$.

Cette valeur permet en effet d'obtenir une sensibilité maximale du signal mesuré en présence d'un déphasage produit par des rotations des interféromètres.

Les intervalles de temps $\delta t_i$ définis dans le procédé de mesure selon l'invention sont avantageusement égaux et valent 1/N de la période de modulation $T_m/2$.

Cette répartition du temps facilite en particulier l'atténuation d'effets parasites dus à des chevauchements de réponses lors des transitions entre les intervalles de temps $\delta t_i$ successifs. De tels effets indésirables sont dus essentiellement à des écarts entre les durées de transit respectives dans les différents interféromètres.

La régularité des intervalles $\delta t_i$ permet de mettre en place des moyens de correction de période $T_m/(2N)$.

Selon un moyen préféré de correction, on applique à un signal de sortie parvenant à l'unité de traitement une porte périodique de traitement du signal. La porte consiste en une modulation d'amplitude avec une période de porte égale à 1/(2N) de la période de modulation $T_m$, laissant le signal inchangé pendant une partie de chaque période de porte centrée sur un des intervalles de temps $\delta t_i$, et l'annulant pendant l'autre partie de la période. Les effets parasites dus à des écarts entre la demi-période de modulation $T_m/2$ et les périodes propres $\tau_i$ des interféromètres $I_i$ sont ainsi atténués.

Selon un second moyen de correction, on agit sur un signal émis par la source par un montage électronique de modulation relié à la source. Ce montage applique au signal une extinction séquentielle à une période d'extinction égale à 1/(2N) de la période de modulation $T_m$. Les effets parasites dus à des écarts entre la demi-période de modulation $T_m/2$ et les périodes propres $\tau_i$ des interféromètres $I_i$ sont ainsi atténués.

Ce second moyen complète avantageusement le premier. En effet, les signaux n'ayant pas des retombées de pente infinie, celles-ci sont assimilables à des exponentielles ayant lieu à des temps différents et dont la hauteur dépend de la puissance totale émise par la source. L'effet parasite ainsi créé est minimisé en éteignant la source sur chacun des pics des signaux, de manière à réduire sensiblement la hauteur de l'exponentielle.

Cette extinction séquentielle est avantageusement réalisée grâce à un montage électronique de modulation qui conserve un faible niveau de bruit.

Selon un mode préféré de mesure, pour chaque interféromètre $I_i$, on compense un éventuel déphasage Sagnac $\delta\Phi_{s,i}$ dû à une rotation de l'interféromètre $I_i$ et s'ajoutant à la composante de mise au biais $\delta\Phi_{m,i}$ de la différence de phase de modulation commandée $\delta\Phi_{c,i}$ associée, par une composante de contre-réaction $\delta\Phi_{cr,i}$ de la différence de phase de modulation $\delta\Phi_{c,i}$. La somme $\delta\Phi_{s,i}+\delta\Phi_{cr,i}$ du déphasage Sagnac $\delta\Phi_{s,i}$ et de la composante de contre-réaction $\delta\Phi_{cr,i}$ est constamment asservie à zéro, de façon que les rotations des interféromètres $I_i$ sont déduites des composantes de contre-réaction $\delta\Phi_{cr,i}$.

Il s'agit du fonctionnement en boucle fermée décrit précédemment pour un gyroscope comportant un unique axe de mesure. Les techniques de multiplexage applicables au gyroscope selon l'invention sont ainsi compatibles avec des techniques connues de contre-réaction utilisant des rampes de phase. Ces techniques permettent d'obtenir une réponse linéaire en fonction des rotations mesurées, et indépendante de la puissance optique.

L'invention concerne également un gyroscope interférométrique à fibre optique permettant la mesure de vitesses de rotation par rapport à N axes, N étant au moins égal à 2. Ce gyroscope comporte :

- N interféromètres $I_i$ en anneau de Sagnac, deux ondes contrapropagatives se propageant dans chacun des interféromètres $I_i$, le temps de propagation des ondes entre leur séparation et leur recombinaison étant une durée de transit $\tau_i$, les durées $\tau_i$ associées aux interféromètres $I_i$ étant approximativement égales à une durée commune de transit $\tau$,
- une source lumineuse commune,
- un photodétecteur commun,
- des modulateurs de phase générant des différences $\delta\Phi_{c,i}$ de phase de modulation commandées entre les ondes contrapropagatives se propageant dans chacun des interféromètres $I_i$,
- une unité de traitement commandant les modulateurs, recevant des signaux provenant du photodétecteur, démultiplexant et démodulant ces signaux, et fournissant les vitesses de rotation des interféromètres $I_i$.

Selon l'invention, les différences de phase de modulation commandées $\delta\Phi_{c,i}$ générées par les modulateurs comportent des composantes de mise au biais $\delta\Phi_{m,i}$ de période de modulation commune $T_m$ sensiblement égale au double $2\tau$ de la durée commune de transit $\tau$ et d'amplitude commune égale à un biais de phase non multiple de $\pi$, la valeur de chaque composante de mise au biais $\delta\Phi_{m,i}$ à un instant t étant opposée à celle de la composante à l'instant $t + T_m/2$. Chaque demi-période $T_m/2$ étant divisée en au moins N intervalles de temps $\delta t_i$, le modulateur de chaque interféromètre $I_i$ produit un changement de signe de la composante de mise au biais $\delta\Phi_{m,i}$ associée, au début d'un et d'un seul des intervalles de temps $\delta t_i$.

De cette façon, un signal parvenant à l'unité de traitement est affecté simultanément par des déphasages Sagnac $\delta\Phi_{s,i}$ représentatifs des vitesses de rotation de l'ensemble des interféromètres $I_i$ et se rajoutant aux différences de phase de modulation $\delta\Phi_{c,i}$. Ces déphasages Sagnac $\delta\Phi_{s,i}$ sont extraits par l'unité de traitement par un échantillonnage du signal sur les N intervalles de temps $\delta t_i$.

Selon un mode de réalisation préféré du gyroscope selon l'invention, il comporte un ensemble de coupleurs reliant la source, le photodétecteur et les interféromètres $I_i$. L'ensemble de coupleurs présente N portes d'entrée et N portes de sortie, une porte d'entrée étant connectée à la source et N - 1 portes d'entrée au photodétecteur, et les N portes de sortie étant connectées, respectivement, aux interféromètres $I_i$.

Grâce à un tel dispositif, un signal issu de la source se partage en N signaux qui parviennent de façon sensiblement simultanée à l'ensemble des interféromètres et qui, après leur passage dans ces derniers, parviennent de façon approximativement simultanée au photodétecteur du fait que les durées de transit sont approximativement les mêmes pour tous les interféromètres.

D'autre part, ce dispositif rend possible, non seulement la réception d'une même puissance lumineuse par chacun des interféromètres, en provenance de la source, mais aussi la réception par le photodétecteur d'une même puissance lumineuse issue de chacun des interféromètres.

La présence des modulateurs de phase rend possible le multiplexage sans présenter la complexité d'une utilisation de commutateurs optiques.

Dans une première configuration de ce mode de réalisation préféré du gyroscope selon l'invention, le gyroscope comprend un unique coupleur comportant N portes d'entrée et N portes de sortie.

Selon une seconde configuration, les coupleurs comportent, chacun, deux portes d'entrée et deux portes de sortie et forment un ensemble arborescent.

On peut alors avantageusement utiliser des coupleurs à maintien de polarisation, par exemple réalisés par polissage latéral d'une fibre, avec une source lumineuse émettant de la lumière polarisée, telle qu'une diode superluminescente (DSL). Ce type de source est avantageux d'un point de vue économique.

On peut encore utiliser une source à fibre dopée avec une terre rare, telle que du néodyme ou de l'erbium, appelée source à fibre superfluorescente, avec des coupleurs à fibre ordinaire, sans conservation de polarisation.

Selon une conception préférée de cette seconde configuration, le gyroscope comprend deux interféromètres et un coupleur, ce coupleur 1/2, 1/2 partageant une puissance incidente sur une première porte d'entrée connectée à la source, en deux puissances transmises respectivement aux deux portes de sortie connectées aux deux interféromètres, égales chacune à la moitié de la puissance incidente.

De cette façon, les deux interféromètres reçoivent, chacun, une même puissance lumineuse et des signaux issus des interféromètres et reçus par le photodétecteur sont équilibrés.

Selon une autre conception préférée de cette seconde configuration, le gyroscope comprend trois interféromètres et deux coupleurs. Un premier de ces coupleurs a deux portes d'entrée, respectivement connectées à la source et au photodétecteur, une porte de sortie connectée à un premier des interféromètres et une autre porte de sortie connectée à une première porte d'entrée du second coupleur. Le second coupleur 1/2, 1/2 a une seconde porte d'entrée connectée au photodétecteur et les portes de sortie, respectivement aux deux autres interféromètres. Le premier coupleur 1/3, 2/3 partage une puissance incidente sur la porte d'entrée connectée à la source en une première puissance transmise à la porte de sortie connectée au premier interféromètre, égale au tiers de la puissance incidente, et en une seconde puissance transmise à la porte de sortie connectée à la première porte d'entrée du second coupleur, égale aux deux tiers de la puissance incidente.

De cette façon, les trois interféromètres reçoivent, chacun, une même puissance lumineuse et des signaux issus des interféromètres et reçus par le photodétecteur sont équilibrés.

Le chemin optique entre un interféromètre et un coupleur étant supérieur à la longueur de cohérence de la source, les ondes provenant des différents interféromètres sont non-cohérentes et ne peuvent pas interférer.

Des polariseurs sont avantageusement interposés entre les coupleurs et les interféromètres $I_i$.

D'autre part, le gyroscope selon l'invention est utilement couplé à d'autres gyroscopes.

En particulier, il est intéressant qu'il soit couplé à un second gyroscope selon l'invention, par le biais d'un coupleur comportant deux portes d'entrée et deux portes de sortie. Les deux portes d'entrée sont connectées respectivement aux deux sources lumineuses des gyroscopes, et les deux portes de sortie sont connectées respectivement aux deux gyroscopes et leur envoient des signaux optiques.

On utilise ainsi une double source et un double photodétecteur en redondance dans une configuration avec quatre axes de mesure.

L'invention sera décrite plus en détail en référence aux dessins, dans lesquels:

La Figure 1 est une représentation d'un gyroscope tri-axe selon l'invention.

La Figure 2 représente les évolutions temporelles d'un déphasage de mise au biais appliqué selon le procédé de l'invention dans un premier interféromètre du gyroscope de la Figure 1, du même déphasage translaté de la durée de transit, et de la différence de phase de mise au biais générée.

La Figure 3 représente l'évolution temporelle de la différence de phase de la Figure 2, la variation de la puissance d'interférence en fonction de cette différence de phase et l'évolution temporelle de cette puissance.

La Figure 4 représente l'évolution temporelle de la différence de phase des Figures 2 et 3, modifiée par un déphasage Sagnac, la variation de la puissance d'interférence en fonction de la différence de phase obtenue et l'évolution temporelle de cette puissance.

La Figure 5 représente les évolutions temporelles, selon le procédé de l'invention, des déphasages de mise au biais appliqués dans chacun des trois interféromètres du gyroscope de la Figure 1.

La Figure 6 représente les évolutions temporelles, selon ce premier mode de multiplexage, des puissances d'interférence obtenues dans chacun des trois interféromètres de la Figure 1 en rotation, ainsi que de la puissance reçue par le photodétecteur.

La Figure 7 est un schéma synoptique du circuit de démultiplexage et de démodulation correspondant au gyroscope tri-axe de la Figure 1 et au multiplexage de la Figure 5.

La Figure 8 représente les évolutions temporelles des trois signaux de démultiplexage et de démodulation appliqués dans le circuit de la Figure 7.

La Figure 9 met en regard, pour chacun des trois interféromètres de la Figure 1, la différence de phase de mise au biais appliquée et le signal de démultiplexage et de démodulation correspondant.

La Figure 10 représente les différences de phase de mise au biais selon le procédé de l'invention en correspondance avec les signaux de démultiplexage et de démodulation pour un gyroscope bi-axe.

La Figure 11 représente les différences de phase de mise au biais selon le procédé de l'invention en correspondance avec les signaux de démultiplexage et de démodulation, pour un gyroscope comportant N axes de mesure.

La Figure 12 représente les évolutions temporelles d'un déphasage de contre-réaction appliqué dans un interféromètre, du même déphasage translaté de la durée de transit et de la différence de phase de contre-réaction générée.

La Figure 13 représente les évolutions temporelles d'un déphasage de mise au biais appliqué dans un interféromètre, de son translaté de la durée de transit, de la différence de phase de mise au biais correspondante et de la puissance d'interférence, lorsque la période de modulation est un peu supérieure à la durée de transit.

La Figure 14 représente les évolutions temporelles de la puissance d'interférence dans le cas d'une modulation asymétrique, lorsque la période de modulation est respectivement supérieure au double de la durée de transit, égale et inférieure.

La Figure 15 représente l'évolution temporelle de la puissance d'interférence dans le cas d'une modulation asymétrique avec une période de modulation plus grande que le double de la durée de transit, en présence d'une porte synchrone.

La Figure 16 est un schéma synoptique d'une source de lumière modulable à faible bruit.

La Figure 17 est un schéma d'un miroir de courant et de la source modulée du montage représenté sur la Figure 16.

La Figure 18 montre un deuxième mode de réalisation d'un gyroscope multi-axe selon l'invention.

La Figure 19 représente un troisième mode de réalisation d'un gyroscope multi-axe selon l'invention, comprenant quatre axes de mesure.

La Figure 20 est un schéma d'un gyroscope avec quatre axes de mesure, combinant deux gyroscopes à deux axes selon l'invention.

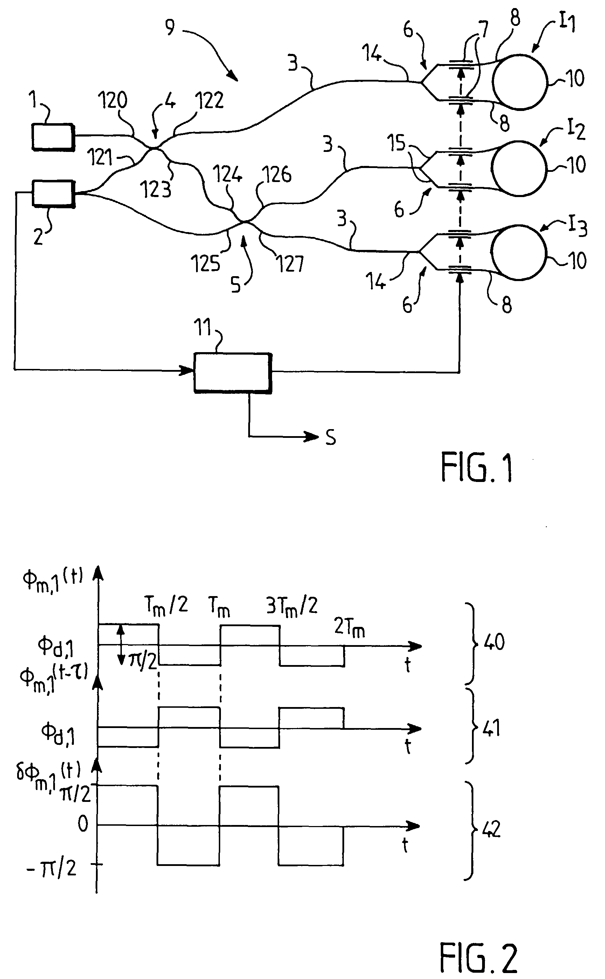

Le gyroscope interférométrique à trois axes de mesure selon l'un des modes de réalisation de l'invention, représenté sur la Figure 1, comporte une source lumineuse 1, un photodétecteur 2, trois interféromètres $I_1$, $I_2$ et $I_3$ et des coupleurs à fibre 4 et 5. La source lumineuse 1 est typiquement une diode superluminescente (DSL), mais peut aussi consister en une source à fibre dopée terre rare ou source superfluorescente. Le photodétecteur 2 est relié à une unité électronique de traitement 11. Chacun des trois interféromètres $I_1$, $I_2$, $I_3$ comprend une bobine multi-tour de fibre optique monomode 10. Les trois bobines 10 ont des longueurs sensiblement égales, si bien qu'un signal lumineux les parcourt en une même durée de transit $\tau$. La rotation combinée des trois bobines 10 doit être mesurée par le gyroscope optique 9. Les interféromètres $I_1$, $I_2$, $I_3$ comprennent, chacun, une jonction Y optique intégrée 6 comportant un guide central 14 se séparant en deux guides-branches 15. Les guides-branches 15 sont connectés aux extrémités 8 des bobines de fibre 10. Un modulateur de phase 7 est placé sur chacun des guides-branches 15 des jonctions Y optiques 6. Les deux coupleurs à fibre 4 et 5 sont des coupleurs à deux portes d'entrée 120, 121, 124, 125 et à deux portes de sortie 122, 123, 126, 127, dits coupleurs "2 x 2".

Le premier coupleur 4 a une porte d'entrée 120 connectée à la source lumineuse 1 et la seconde porte d'entrée 121 au photodétecteur 2. Une première de ses portes de sortie 122 est connectée au guide central 14 de la jonction Y 6 du premier interféromètre $I_1$. Sa seconde porte de sortie 123 est reliée à une des deux portes d'entrée 124 du second coupleur 5. L'ensemble des liaisons est effectué par des fibres optiques 3. Le second coupleur 5 a une porte d'entrée 124 reliée à la porte de sortie 123 du premier coupleur 4, la seconde porte d'entrée 125 connectée au photodétecteur 2 et ses deux portes de sortie 126 et 127, respectivement reliées aux deux interféromètres $I_2$ et $I_3$, en étant connectés aux guides centraux 14 de leurs jonctions Y 6.

Le premier coupleur 4 est un coupleur 1/3, 2/3, également appelé coupleur 4,8 dB, répartissant une puissance incidente en provenance de la source 1 en un tiers à la porte de sortie 122 en direction de l'interféromètre $I_1$ et deux tiers à la porte de sortie 123 en direction du second coupleur 5.

Le second coupleur 5 est un coupleur 1/2, 1/2, également appelé coupleur 3 dB, répartissant une puissance incidente en provenance du premier coupleur 4 en deux puissances égales aux portes de sortie 126 et 127. Cette configuration permet d'éclairer les trois bobines 10, chacune, avec une même puissance et de faire en sorte que le photodétecteur 2 reçoive des puissances égales en provenance de chacun des trois interféromètres $I_1$, $I_2$, $I_3$.

Si l'on utilise comme source lumineuse 1, une DSL, la lumière est polarisée et il est préférable d'utiliser des coupleurs 4, 5 à maintien de polarisation.

En fonctionnement, un signal de puissance $P_s$ est émis par la source 1. Une puissance $P_s/3$ parvient alors au premier interféromètre $I_1$, et la porte d'entrée 124 du second coupleur 5 reçoit une puissance de $2P_s/3$. Cette dernière puissance $2P_s/3$ se répartit ensuite également entre les deux interféromètres $I_2$ et $I_3$ qui reçoivent, chacun, une puissance $P_s/3$. En notant $P_1$, $P_2$ et $P_3$, respectivement, les puissances issues des trois interféromètres $I_1$, $I_2$, $I_3$, la puissance $P_D$ détectée par le photodétecteur 2 est la suivante:

$$P_D = (2/3 \, P_1 + 1/6 \, P_2 + 1/6 \, P_3) + (1/2 \, P_2 + 1/2 \, P_3)$$

$$= 2/3 \, (P_1 + P_2 + P_3)$$

La puissance totale détectée $P_D$ vaut donc les deux tiers de la somme des puissances issue des interféromètres $I_1$, $I_2$, $I_3$, c'est-à-dire 2/9 de la puissance $P_s$ émise par la source 1. Les trois bobines 10 sont donc éclairées avec la même intensité et envoient des signaux équilibrés au photodétecteur 2.

L'unité électronique de traitement commande les modulateurs 7 qui appliquent des déphasages de modulation commandés $\Phi_{c,i}$ correspondant aux modulations et au multiplexage choisis.

Dans la configuration décrite, deux modulateurs 7 situés sur les guides-branches 15 d'une même jonction Y 6 appliquent simultanément un déphasage opposé. On peut donc distinguer les trois déphasages de modulation commandés $\Phi_{c,1}$, $\Phi_{c,2}$ et $\Phi_{c,3}$ appliqués, respectivement, dans les trois interféromètres $I_1$, $I_2$ et $I_3$.

L'unité de traitement 11 reçoit également des signaux provenant du photodétecteur 2 qu'elle démultiplexe et démodule. Les bobines 10 des interféromètres $I_1$, $I_2$, $I_3$ étant en rotation, l'unité de traitement 11 peut ainsi extraire des signaux reçus, les vitesses de rotation S des bobines 10.

Lors d'un fonctionnement en boucle fermée, le traitement des signaux reçus permet d'ajuster les déphasages $\Phi_{c,i}$ appliqués par les modulateurs 7.

Les déphasages de modulation commandées $\Phi_{c,i}$ comportent une composante de mise au biais $\Phi_{m,i}$ consistant en une modulation périodique et une composante éventuelle de contre-réaction $\Phi_{cr,i}$ pour un fonctionnement en boucle fermée. La composante de mise au biais $\Phi_{m,i}$ est elle-même la somme d'un terme d'oscillation $\Phi_{o,i}$ et d'un terme constant $\Phi_{d,i}$ qui n'a pas d'incidence sur la différence de phase $\delta\Phi_{m,i}$ générée par le déphasage $\Phi_{m,i}$. On a donc :

$$\Phi_{c,i} = \Phi_{m,i} + \Phi_{cr,i} = \Phi_{o,i} + \Phi_{d,i} + \Phi_{cr,i}$$

Les durées de transit dans les différentes bobines sont approximativement identiques et égales à $\tau$. Il en résulte que la différence de phase $\delta\Phi_{c,i}$ générée

dans l'interféromètre $I_i$, est la somme d'une différence de phase de mise au biais $\delta\Phi_{m,i}$ périodique et d'une différence de phase éventuelle de contre-réaction $\delta\Phi_{cr,i}$ avec :

$$\delta\Phi_{c,i}(t) = \delta\Phi_{m,i}(t) + \delta\Phi_{cr,i}(t)$$

$$= (\Phi_{o,i}(t) - \Phi_{o,i}(t - \tau)) + (\Phi_{cr,i}(t) - \Phi_{cr,i}(t - \tau))$$

Le multiplexage des signaux produits par les interféromètres $I_i$ peut être réalisé en exploitant les termes d'oscillation $\Phi_{o,i}$ des composantes de mise au biais $\Phi_{m,i}$.

Dans le multiplexage selon le procédé de l'invention, on effectue une modulation standard pour chacun des trois interféromètres $I_i$, mais en la décalant dans le temps.

Ce multiplexage est illustré sur les Figures 2 à 9. Les modulateurs 7 de l'interféromètre $I_1$ appliquent aux ondes contrapropagatives se propageant dans la bobine 10 de l'interféromètre $I_1$, un même déphasage de mise au biais $\Phi_{m,1}$. Son évolution temporelle 40, représentée sur la Figure 2, consiste en une modulation autour de la valeur de décalage $\Phi_{d,1}$, de période $T_m$, et d'amplitude $\pi/4$.

La période de modulation $T_m$ est le double de la durée commune de transit $\tau$. Après propagation d'une onde dans la bobine 10 de l'interféromètre $I_1$, le déphasage de mise au biais $\Phi_{m,1}$ de l'onde présente une évolution temporelle 41 translatée de la durée de transit $\tau$ par rapport à la précédente 40. Comme la période $T_m$ est égale à $2\tau$, il en résulte que la différence de phase de mise au biais $\delta\Phi_{m,1}$ générée par les modulateurs 7, présente une évolution temporelle 42, représentée sur la Figure 2, consistant en une modulation autour de 0, de période $T_m$, et d'amplitude $\pi/2$.

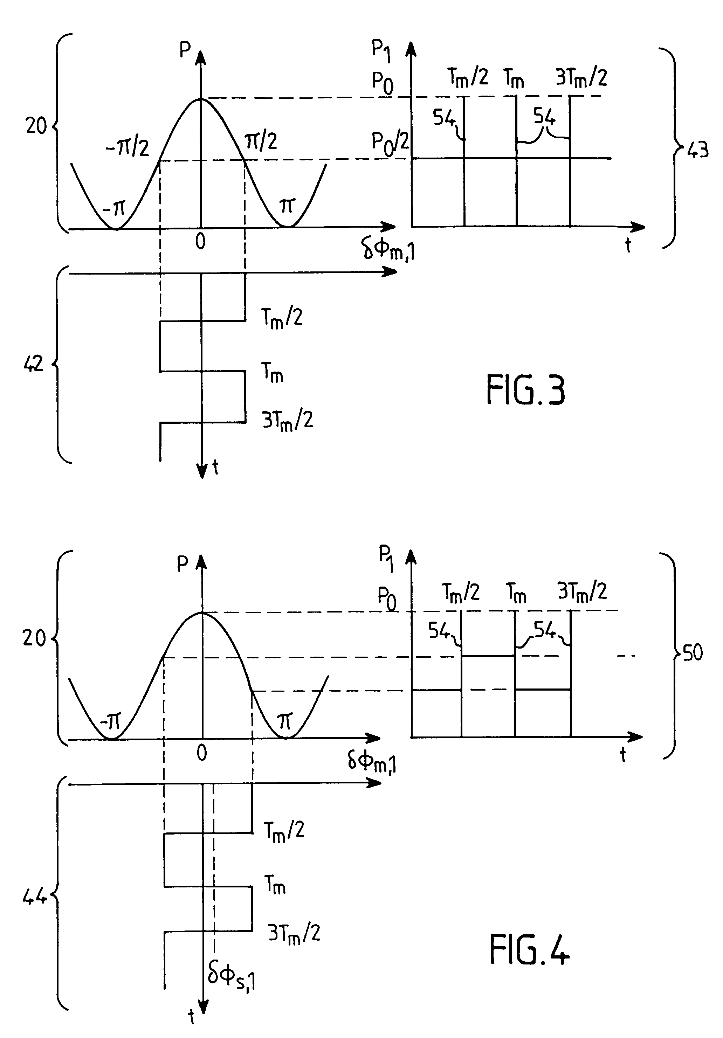

La puissance d'interférence $P_1$ dans l'interféromètre $I_1$ est directement déduite de cette évolution 42. La variation 20 de la puissance $P$ d'interférence en fonction de la différence de phase $\delta\Phi$ d'ondes superposées, représentée sur la Figure 3, permet d'obtenir un signal pour une différence de phase $\delta\Phi_{m,1}$ non multiple de $\pi$ et une sensibilité maximale lorsque la différence de phase $\delta\Phi_{m,1}$ est un multiple impair de $\pi/2$.

L'évolution temporelle 42 de la différence de phase $\delta\Phi_{m,1}$ et la variation 20 de la puissance $P$ en fonction d'une différence de phase $\delta\Phi$, permettent de contrôler l'évolution temporelle 43 de la puissance $P_1$ d'interférence en sortie de l'interféromètre $I_1$.

En appelant $P_0$ la puissance maximale obtenue pour deux ondes en phase, l'évolution 43 qui a une période $T_m/2$, présente un pic 54 de hauteur $P_0$ à chaque début de période, et vaut $P_0/2$ pendant chaque demi-période $T_m/2$, comme ceci apparaît sur la Figure 3.

Lorsque la bobine 10 de l'interféromètre $I_1$ est en rotation, un déphasage Sagnac $\delta\Phi_{s,1}$ proportionnel à la vitesse $S$ de rotation se rajoute à la différence de phase de mise au biais $\delta\Phi_{m,1}$.

L'évolution temporelle 44 de la différence de phase de mise au biais $\delta\Phi_{m,1}$ lors d'une rotation de la bobine 10 de l'interféromètre $I_1$, représentée sur la Figure 4, est alors décalée du déphasage $\delta\Phi_{s,1}$ par rapport à l'évolution 42 en l'absence de rotation.

Grâce à la variation 20 de la puissance $P$ d'interférence en fonction d'un déphasage $\delta\Phi$, on en déduit comme en l'absence de rotation l'évolution temporelle 50 de la puissance $P_1$ d'interférence en sortie de l'interféromètre $I_1$, représentée sur la Figure 4.

On trouve que cette évolution 24 admet $T_m$ pour période, présente des pics 54 de hauteur $P_0$ à chaque demi-période $T_m/2$, et présente une alternance de valeurs inférieures et supérieures à $P_0/2$ pendant les demi-périodes $T_m/2$.

La connaissance de ce signal permettrait de déduire, grâce à des méthodes usuelles, la vitesse de rotation de la bobine 10 de l'interféromètre $I_1$, à partir de la modulation de puissance obtenue.

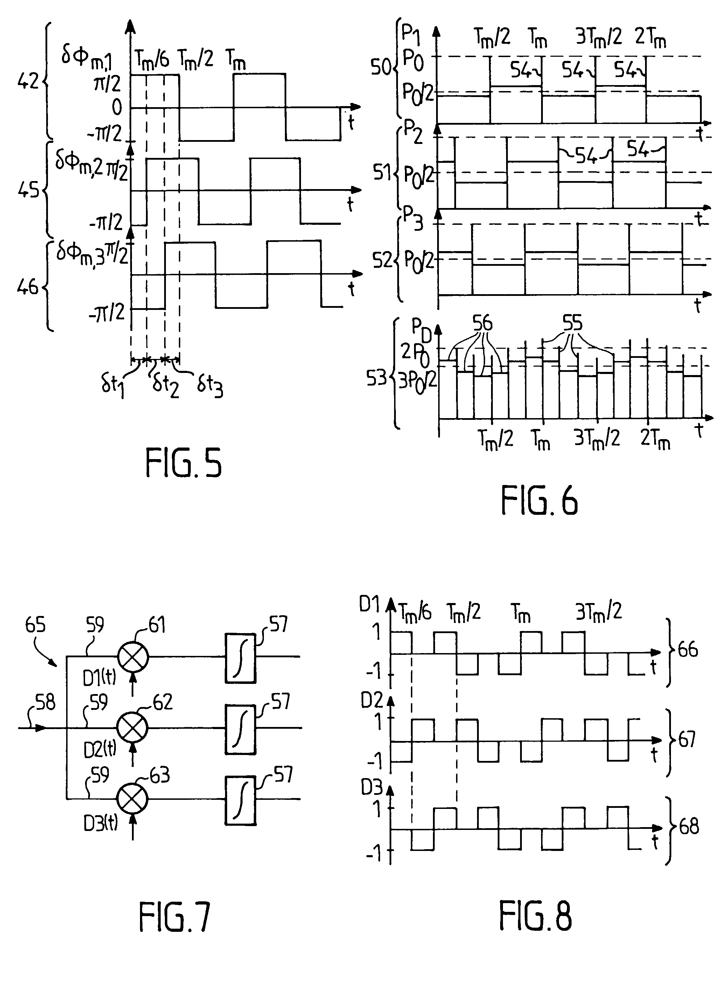

Les différences de phase de mise au biais $\delta\Phi_{m,2}$ et $\delta\Phi_{m,3}$, respectivement générées dans les interféromètres $I_2$ et $I_3$, présentent des évolutions temporelles 45 et 46, représentées sur la Figure 5, simplement déduites de la différence de phase de mise au biais $\delta\Phi_{m,1}$ générée dans l'interféromètre $I_1$ par des translations temporelles respectives de durée $T_m/6$ et $T_m/3$. Ces différences de phase $\delta\Phi_{m,2}$ et $\delta\Phi_{m,3}$ sont obtenues en appliquant des déphasages de mise au biais $\Phi_{m,2}$ et $\Phi_{m,3}$ dans les interféromètres $I_2$ et $I_3$ dont les évolutions temporelles (non représentées) sont respectivement déduites de l'évolution 40 du déphasage $\Phi_{m,1}$ par des translations temporelles respectives de durée $T_m/6$ et $T_m/3$.

Selon ce procédé, on utilise ainsi une durée d'horloge $T_h$ égale à $T_m/6$.

Chaque demi-période $T_m/2$ est partagée en trois intervalles de temps successifs : $\delta t_1$, $\delta t_2$ et $\delta t_3$. Pendant chaque durée $T_h$, une seule des différences de phase de mise au biais $\delta\Phi_{m,i}$ a un signe opposé à celui des deux autres. Les puissances $P_1$, $P_2$ et $P_3$ d'interférence obtenues en sortie des interféromètres $I_i$ sont déduites des différences de phase $\delta\Phi_{m,i}$.

En présence de déphasages Sagnac $\delta\Phi_{s,i}$ dus aux rotations des bobines 10 des interféromètres $I_i$, leurs évolutions temporelles 50, 51 et 52, représentées sur la Figure 6, consistent en des modulations de période $T_m$, centrées autour d'une valeur $P_0/2$, et présentant des pics 54 de hauteur $P_0$ au bout de chaque demi-période $T_m/2$.

Les trois modulations de puissance sont décalées les unes par rapport aux autres de $T_m/6$. Il en résulte que la puissance $P_D$ reçue par le photodétecteur 2, en provenance des trois interféromètres $I_i$, qui est la somme des trois puissances $P_1$, $P_2$ et $P_3$ multipliées par un coefficient $2/3$, prend à chaque instant en compte les trois modulations correspondant respectivement aux déphasages Sagnac $\delta\Phi_{s,i}$ apparaissant dans chaque in-

terféromètre $I_i$.

L'évolution temporelle 53 de la puissance $P_D$, représentée sur la Figure 6, est ainsi une fonction de période $T_m$ présentant des paliers 56 de durée $T_m/6$ et de hauteur oscillant autour de la valeur $3P_0/2$, et des pics 55 apparaissant à chaque début de palier 56 et de hauteur oscillant autour de la valeur $2P_0$.

A partir du signal reçu par l'unité de traitement 11 en provenance du photodétecteur 2, il est possible de reconstituer les signaux issus des différents interféromètres $I_i$ grâce à un circuit électronique 65 de démultiplexage et de démodulation représenté sur la Figure 7. Par la suite, on emploiera le terme "démultiplexage" pour désigner à la fois le démultiplexage et la démodulation.

Ce circuit 65 comprend un fil d'arrivée 58 se partageant en trois fils 59 sur lesquels sont placés des unités de démultiplexage 61, 62 et 63 et des intégrateurs 57. Les unités de démultiplexage 61, 62 et 63 appliquent, respectivement aux signaux détectés circulant dans les fils 59, des signaux de démultiplexage $D_1$, $D_2$ et $D_3$.

Les évolutions temporelles respectives 66, 67 et 68 des signaux de démultiplexage $D_1$, $D_2$ et $D_3$, représentées sur la Figure 8, permettent de reconstituer les signaux en provenance, respectivement des interféromètres $I_1$, $I_2$ et $I_3$. Le démultiplexage fonctionnant en boucle fermée, les signaux $D_i$ peuvent être normés.

L'évolution 66 du signal $D_1$ est une fonction impaire de période $T_m$ valant 1 pendant le premier tiers $T_m/6$ de demi-période $T_m/2$, 0 pendant le deuxième et 1 pendant le troisième. Les évolutions temporelles 67 et 68 des signaux $D_2$ et $D_3$ sont, respectivement, déduites de l'évolution 66 par des translations temporelles de durée $T_m/6$ et $T_m/3$.

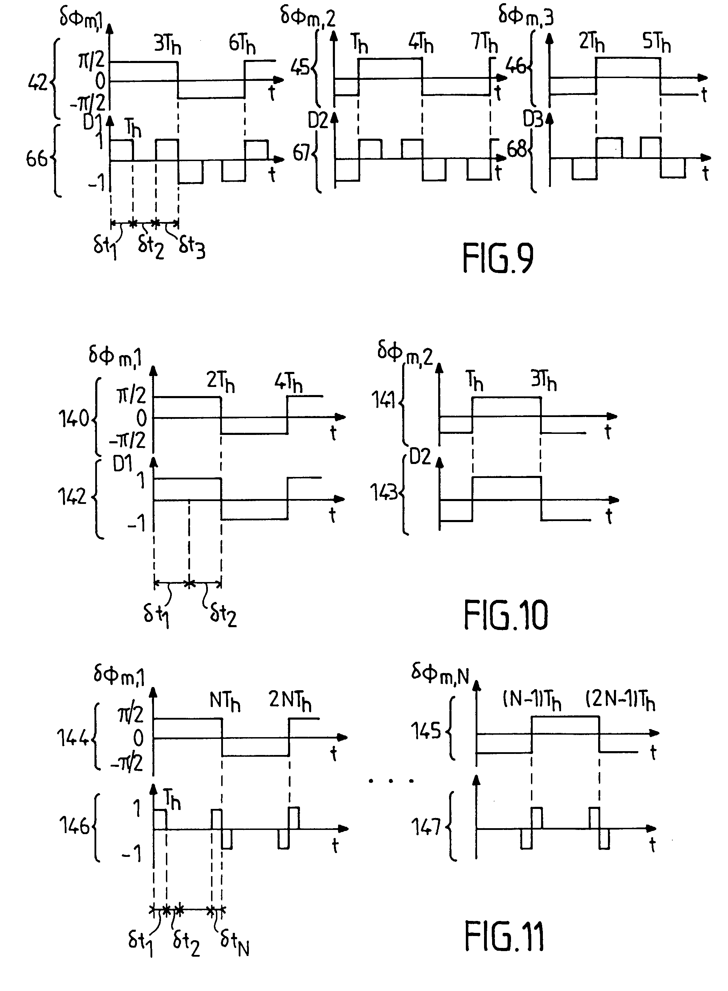

Il est intéressant de mettre en correspondance les différences de phase de mise au biais 42, 45, 46 avec les signaux de démultiplexage 66, 67, 68, comme cela est fait sur la Figure 9. Il apparaît que chaque signal $D_i$ est déduit simplement de la différence de phase $\delta\Phi_{m,i}$ associée. Il suffit de reprendre cette dernière en la normant, et de l'annuler pendant une durée d'horloge $T_h$ au milieu de chaque créneau.

Le même procédé de multiplexage et de démultiplexage est aisément transposable à deux axes de mesure au lieu de trois. Le temps d'horloge $T_h$ est alors égal à $T_m/4$ et définit sur chaque demi-période $T_m/2$ deux intervalles $\delta t_1$ et $\delta t_2$. Les différences de phase de mise au biais $\delta\Phi_{m,1}$ et $\delta\Phi_{m,2}$ appliquées aux deux axes, représentées sur la Figure 10, sont des modulations dont les évolutions temporelles 140 et 141 sont similaires à celles décrites précédemment 42, 45, 46. Elles sont décalées l'une par rapport à l'autre de la durée $T_h = T_m/4$. Les signaux de démultiplexage $D_1$ et $D_2$ ont des évolutions 142 et 143 directement déduites de celles 140 et 141 des différences de phase, par un simple coefficient multiplicateur. Le premier signal de démultiplexage $D_1$ vaut ainsi 1 de 0 à $2T_h$, -1 de $2T_h$ à $4T_h$, tandis

que le second vaut -1 de 0 à $T_h$, 1 de $T_h$ à $3T_h$ et -1 de $3T_h$ à $4T_h$. Ils correspondent donc aussi à des modulations standard.

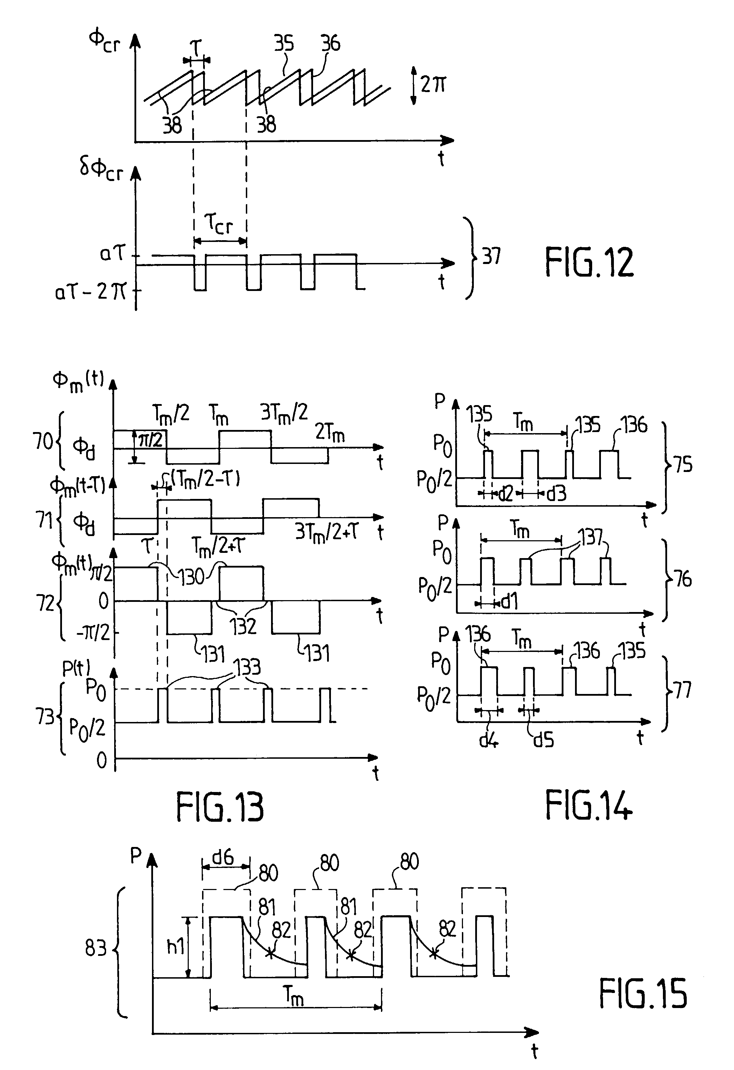

Il est facile de généraliser ce procédé à un nombre N quelconque d'axes de mesure. Le temps d'horloge $T_h$ vaut alors $T_m/(2N)$ et définit sur chaque demi-période $T_m/2$ N intervalles $\delta t_1$, $\delta t_2$,...$\delta t_N$. Les N différences de phase de mise au biais $\delta\Phi_{m,i}$ appliquées respectivement aux N axes, ont des évolutions temporelles 144, 145 successivement décalées de $T_h$ (Figure 11).

Les N signaux $D_1$, $D_2$,..., $D_N$ de démultiplexage sont déduits des différences de phase $\delta\Phi_{m,i}$ par une simple inversion matricielle. Leurs évolutions temporelles 146, 147 (Figure 11) sont obtenues à partir de celles 144, 145 des différences de phase normées à 1, en les annulant sur (N-2) durées d'horloge $T_h$ au milieu de chaque créneau. Le $i^{\text{ème}}$ signal de démultiplexage $D_i$ vaut ainsi 1 sur l'intervalle $\delta t_i$, 0 de $\delta t_{i+1}$ à $\delta t_{N+i-2}$, 1 sur $\delta t_{N+i-1}$, -1 sur $\delta t_{N+i}$, 0 de $\delta t_{N+i+1}$ à $\delta t_{2N+i-2}$ et -1 sur $\delta t_{2N+i-1}$.

Le démultiplexage ainsi réalisé est très simple à mettre en oeuvre numériquement avec une électronique numérique, après conversion analogique-numérique du signal du photodétecteur 2 à chaque intervalle $\delta t_i$.

La mesure des rotations peut être améliorée par un fonctionnement en boucle fermée, en soi connu. Les modulateurs 7 de chaque interféromètre $I_i$ appliquent alors des déphasages de contre-réaction $\Phi_{cr,i}$ qui s'ajoutent au déphasage de mise au biais $\Phi_{m,i}$ pour constituer les déphasages de modulation commandée $\Phi_{c,i}$. L'évolution temporelle 35 typique d'un tel déphasage $\Phi_{cr}$, représentée sur la Figure 12, consiste en une succession de rampes de phase 38 de période $\tau_{cr}$ de contre-réaction et de hauteur $2\pi$.

Après la traversée de la bobine 10 de l'un des interféromètres $I_i$, l'évolution temporelle 36 du déphasage de contre-réaction $\Phi_{cr}$ est translatée d'une durée $\tau$, comme représenté sur la Figure 12. En notant a la pente des rampes de phase 38, la différence de phase de contre-réaction $\delta\Phi_{cr}$ générée par les modulateurs 7 présente donc une évolution temporelle 37 en créneau, telle que la différence de phase $\delta\Phi_{cr}$ est constamment égale à $a\tau$, à un facteur additif $2\pi$ près.

L'asservissement ainsi réalisé permet de déduire aisément de a, ou plus directement de la fréquence de retombée des rampes de phase 38, la vitesse de rotation S de la bobine 10 correspondante.

Ce fonctionnement en boucle fermée est parfaitement stable, et les interactions entre les signaux issus respectivement des interféromètres $I_i$, dues en particulier à leur retour sur la source 1 qui module cette dernière, sont compensées par l'asservissement.

Bien que le choix d'un biais de phase égal à $\pi/2$ soit particulièrement avantageux, il est possible de choisir toute autre valeur non multiple de $\pi$.

D'autre part, bien que la partition de la période $T_m$ en intervalles de temps $\delta t_i$ de même durée soit particulièrement pratique, en particulier par leur coïncidence avec le temps d'horloge $T_h$, il est envisageable d'utiliser des intervalles de temps $\delta t_i$ de durées distinctes, l'essentiel étant d'obtenir une partition de la période $T_m$.

On peut également combiner le multiplexage par décalage dans le temps avec des systèmes de modulation plus complexes que celui présenté à titre d'exemple. Ainsi, il peut être avantageux de l'utiliser avec une modulation, non plus en créneaux, mais à quatre états, en soi connue. Typiquement, celle-ci présente une succession périodique des quatre biais de phase $\pi/4$, $3\pi/4$, $-3\pi/4$, $-\pi/4$, ce cas particulier n'étant pas limitatif.

Dans la plupart des réalisations, les durées de transit $\tau_i$ dans les bobines 10 des interféromètres $I_i$ ne sont qu'approximativement égales à une même durée de transit $\tau$. La période de modulation $T_m$ est alors choisie égale au double $2\tau$ de cette durée de transit $\tau$.

Les différences entre ces longueurs provoquent des erreurs de biais qui constituent une difficulté majeure dans l'utilisation du gyroscope multi-axe 9.

Dans un interféromètre $I_i$ avec une durée de transit $\tau$ et un modulateur 7 associé y appliquant un déphasage de mise au biais $\Phi_m$ de période $T_m$ légèrement supérieure à $\tau$, et d'amplitude $\pi/4$, une onde incidente étant soumise à cette évolution temporelle 70 du déphasage $\Phi_m$, comme représenté sur la Figure 13, on a en sortie de la bobine 10 de l'interféromètre $I_i$ un déphasage de mise au biais $\Phi_m(t - \tau)$ dont l'évolution temporelle 71 est translatée d'une durée $\tau$ par rapport à celle 70 du déphasage appliqué $\Phi_m(t)$.

Il en résulte que la différence de phase de mise au biais $\delta\Phi_m$ obtenue en sortie de l'interféromètre $I_i$, a une évolution temporelle 72 correspondant à une modulation de période $T_m$ et d'amplitude $\pi/2$, centrée autour de zéro, comme en l'absence d'erreur de biais.

Cependant, entre les paliers supérieurs 130 et les paliers inférieurs 131 constituant la modulation, apparaissent des paliers 132 de déphasage nul, de durée $(T_m/2) - \tau$. Il en résulte que l'évolution temporelle 73 de la puissance d'interférence due à la différence de phase de mise au biais $\delta\Phi_m$ n'est plus, comme en l'absence d'erreur de mise au biais, une évolution stationnaire de hauteur $P_0/2$ interrompue par des pics 54 de puissance de hauteur $P_0$ à la cadence $2/T_m$, mais par des créneaux 133 de durée $(T_m/2) - \tau$, de même hauteur et de même cadence que les précédents pics 54.

Une telle évolution 73 de puissance ne fausse pas a priori la justesse de mesures effectuées à partir de déphasages Sagnac $\delta\Phi_s$ représentatifs de vitesses de rotation S des bobines 10 des interféromètres $I_i$. En effet, seule compte la différence entre deux signaux obtenus avec un décalage temporel d'une demi-période, correspondant à la différence $P(t) - P(t + T_m/2)$. Cette différence n'est pas affectée par les créneaux 133 de l'évolution $P(t)$.

Malheureusement, en pratique, le signal carré n'est pas parfaitement symétrique du fait, en particulier, de temps de montée et de descente a priori différents.

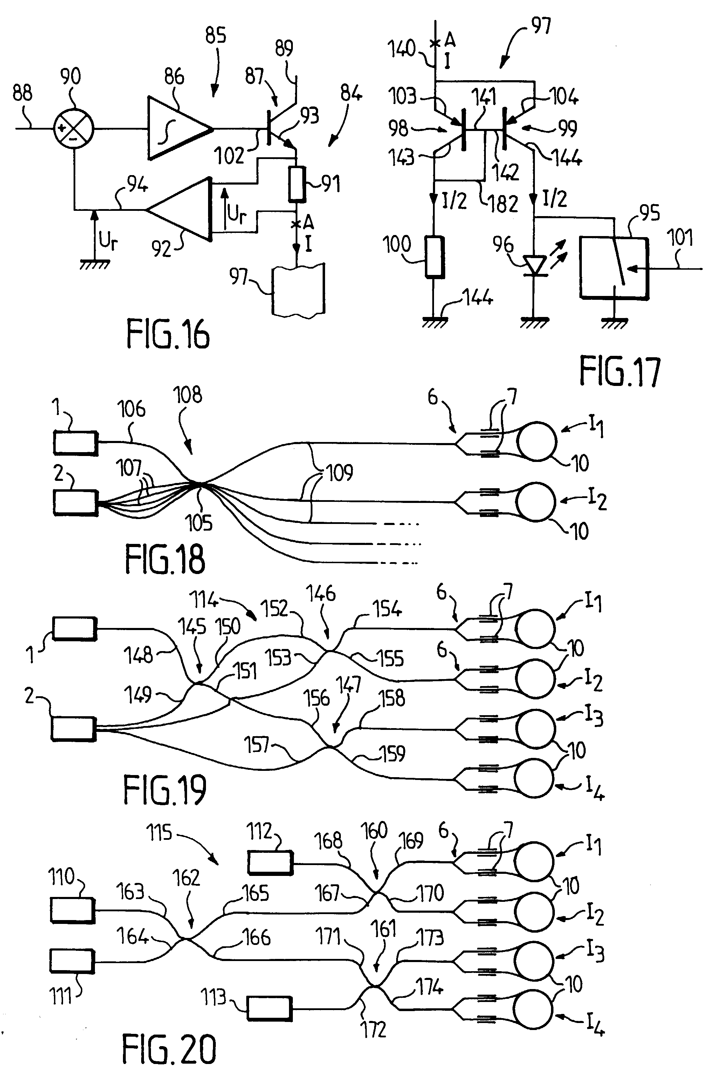

En présence d'une telle modulation carrée asymétrique, les évolutions temporelles 75, 76 et 77 des puissances d'interférence, représentées sur la Figure 14, font apparaître des créneaux 135, 136, 137 à la cadence $2/T_m$.

Lorsque la période de modulation $T_m$ est égale au double $2\tau$ de la durée de transit $\tau$, l'évolution temporelle 76 de la puissance P admet des créneaux 137 de même durée $d_1$, cette durée dépendant de l'asymétrie de la modulation. Lorsque la période de modulation $T_m$ est supérieure au double $2\tau$ de la durée de transit $\tau$, l'asymétrie de la modulation fait apparaître, dans l'évolution temporelle 75 de la puissance d'interférence, une alternance de créneaux 135 et 136 de durées, respectivement inférieures $d_2$ et supérieures $d_3$. La réponse n'admet donc plus $T_m/2$ pour période, et les écarts obtenus faussent la justesse des résultats.

Un phénomène analogue se produit lorsque la période de modulation $T_m$ est inférieure au double $2\tau$ de la durée de transit $\tau$. On observe alors sur l'évolution fréquentielle 77 de la puissance d'interférence, une alternance de créneaux 136 et 135 de durées, respectivement supérieures $d_4$ et inférieures $d_5$.

En notant $Df$, l'écart relatif en fréquence par rapport à la fréquence propre $1/(2\tau)$ de la bobine 10 de l'interféromètre $I_i$, c'est-à-dire $Df = (1/T_m - 1/(2\tau)).2\tau$, on montre que le biais moyen en radian ainsi créé vaut $2\pi Df$. Or, la variation relative de la fréquence propre $1/(2\tau)$ en fonction de la température est de l'ordre de 10 ppm par Kelvin.

On obtient alors une erreur de l'ordre de $10^{-3}$ rad sur les 100K de bande thermique spécifiée, ce qui est bien au-delà d'un ordre de $10^{-6}$ ou $10^{-7}$ rad demandé.

Les erreurs de biais obtenues après démodulation à une période $T_m/2$, sont principalement concentrées au niveau de créneaux 135, 136, 137 de courtes durées $d_1$, $d_2$, $d_3$, $d_4$, $d_5$.

Selon un mode de réalisation préféré de l'invention, l'unité électronique de traitement 11 comporte une porte périodique de traitement de signal de période $T_m/2$. Cette méthode, illustrée sur la Figure 15, consiste ainsi à éliminer dans l'évolution temporelle 83 de la puissance d'interférence reçue dans l'unité de traitement 11, des intervalles de temps de durée $d_6$ constituant une porte périodique 80. Les points d'échantillonnage temporel utilisés dans l'unité de traitement 11 sont ainsi choisis en dehors de ces intervalles de temps.

Lors d'un multiplexage par extinction à $\pi$ ou par décalage dans le temps, les pics 33, 55 obtenus dans les signaux de réponse 32, 53 reçus par le photodétecteur 2, apparaissent à une cadence de $6/T_m$. La porte de traitement électronique 80 utilisée pour filtrer les erreurs de biais, a donc une période $T_m/6$.

Plus généralement, un multiplexage avec N interféromètres $I_i$ nécessiterait une porte de période $T_m/N$.

Bien que cette porte soit efficace, elle ne supprime pas certains défauts. En particulier, les signaux n'ayant pas des retombées de pente infinie, il est nécessaire de prendre en compte des décroissances exponentielles 81 ayant lieu à des temps différents et donc la hauteur $h_1$ dépend de la puissance totale $P_s$ émise par la source, comme on peut le voir sur la Figure 15. Les points d'échantillonnage 82 choisis sur la courbe d'évolution temporelle 83 de puissance, ont donc des valeurs faussées par les décroissances exponentielles 81.

Pour minimiser cet effet, il est intéressant d'éteindre la source 1 sur chacun des pics temporels 33, 55, de manière à réduire autant que possible les hauteurs $h_1$ des décroissances exponentielles 81.

Pour cela, un montage électronique de modulation 84, tel que celui représenté sur les schémas synoptiques des Figures 16 et 17, est réalisé. Ce montage électronique 84 consiste en une porte logique 95 couplée à une générateur de courant faible bruit 85 par le biais d'un miroir de courant 97. La porte logique 95 est connectée en parallèle avec une diode superluminescente 96 faisant office de source lumineuse 1. Cette porte logique 95 permet d'appliquer une modulation en U 101 qui court-circuite ou non la DSL 96. L'alimentation en courant est fournie à ce montage 95, 96 par un générateur de courant faible bruit 85 recevant le courant par une entrée 89.

L'intensité lumineuse émise par la DSL 96 est directement dépendante du courant la traversant. C'est pourquoi le niveau de bruit sur le générateur de courant 85 doit être maintenu bas. Typiquement, il doit être inférieur à 10 nA/√Hz sur la bande 1 kHz-10 MHz pour un courant de 80 mA, pour rester en dessous du niveau de bruit photonique sur le photodétecteur 2.

Le générateur de courant faible bruit 85 comporte un transistor NPN 87 comprenant une entrée 89 d'alimentation en courant, une connexion 102 et une sortie 93 conduisant au miroir de courant 97 en passant par une résistance de mesure 91.

Une boîte 92 d'extrémité est branchée en parallèle de la résistance 91 de façon à obtenir en sortie 94 de la boîte 92 d'extrémité, la tension $U_r$ appliquée aux bornes de la résistance 91. Cette sortie 94 est connectée à un comparateur 90 comportant une entrée 88 permettant d'appliquer une tension de consigne. La différence entre la tension de consigne et la tension de résistance $U_r$ est transmise par le comparateur 90 à un intégrateur 86. Celui-ci conduit à la connexion 102 du transistor 87.

En fonctionnement, le courant d'intensité I se dirigeant vers la DSL 96 est mesuré à l'aide de la résistance 91 qui génère la tension $U_r$. Cette tension est comparée à la valeur de consigne entrée dans le comparateur 90, et la différence entre les deux tensions pilote l'intégrateur 86 qui réagit sur le transistor 87 pour asservir la valeur I du courant.

La fréquence de coupure de cet asservissement est faible pour minimiser le bruit, mais cependant suffisante pour compenser d'éventuelles dérives thermiques des composants. Le transistor 87 fournit le courant à la résistance 91 tout en l'isolant de l'alimentation. Le bruit de cette alimentation est ainsi filtré. La pratique montre que l'on atteint des niveaux de bruit inférieurs à 1 nA/√Hz sur la bande 1 kHz-10 MHz pour de tels montages.

L'utilisation de la porte logique 95 permet d'obtenir des temps de montée très courts, inférieurs à 10 ns et de parasiter très peu les alimentations. En effet, si l'on a un générateur de courant parfait, le courant débité par l'alimentation est constant quel que soit l'état de la porte 95.

Cependant, ce montage ne peut être utilisé avec le générateur faible bruit 85, car les variations de charge provoquées par la modulation 101 perturbent le générateur de courant 84.

Pour surmonter cette difficulté de variation de charge lors de la modulation 101, on utilise le miroir de courant 97. Celui-ci est connecté à la résistance 91 à partir d'un point A. Son intérêt est que la charge vue du point A soit fixe, indépendamment de toute modulation.

Le miroir de courant 97 comprend deux transistors PNP 98 et 99, comportant respectivement deux entrées 103 et 104, deux sorties 143 et 144 et deux connexions 141 et 141 reliées l'une à l'autre. Le fil d'entrée 140 dans le miroir de courant 97, provenant du point A, se partage en deux pour aboutir aux entrées 103 et 104 des transistors 98 et 99. La sortie 143 du transistor 98 est reliée à une résistance 100 connectée à la terre 144. La sortie 144 du second transistor 99 est quant à elle reliée au montage 95, 96 de modulation de source. Un fil 182 relie la jonction des connections 141, 142 des transistors 98 et 99 avec la sortie 143 du transistor 198.

En fonctionnement, la branche formée par le transistor 98 et la résistance 100 présente une charge fixe, car le transistor 98 est montée comme une diode, les deux transistors 98 et 99 étant équivalents. Comme les tensions de base des deux transistors 98 et 99 sont équivalentes, le courant en sortie 144 du transistor 99 en direction du montage 95, 96 de modulation de source est identique à celui en sortie 143 du transistor 98 se dirigeant vers la résistance 100, indépendamment de la charge dans la branche contenant le montage 95, 96.

Un courant incident d'intensité I parvenant au miroir de courant 97 à partir du point A se répartit donc en deux courants d'intensité I/2 se dirigeant, respectivement vers la résistance 100 et vers le montage 95, 96.

La présence du miroir de courant 97 entre les dispositifs 95, 96 de modulation de source et le générateur de courant faible bruit 85 permet ainsi d'obtenir une source 1 de lumière très faible bruit modulable rapidement. On remédie de cette façon au rayonnement de parasites sur les alimentations dû à la modulation du générateur 85.

Avec ce montage électronique de modulation 84, on constate que le niveau de bruit est indépendant de la modulation 101 appliqué à la DSL 96. On trouve également que l'intensité parcourant la DSL 96 a typiquement un temps de montée de l'ordre de 20 ns pour un créneau d'une hauteur de 80 mA. Les phénomènes électro-optiques étant nettement plus rapides que ceux électroniques, la puissance optique fournie par la DSL 96 a le même profil que le courant la parcourant.

Sur le même principe que celui évoqué précédemment, il est possible de concevoir toutes sortes d'autres gyroscopes optiques multi-axes utilisant des procédés de multiplexage identiques.

En particulier, selon un mode de réalisation alternatif de gyroscope optique multi-axe, représenté sur la Figure 18, on prévoit l'utilisation de N interféromètres $I_i$. Ce gyroscope optique 108 comporte une source lumineuse 1, un photodétecteur 2 et des interféromètres $I_i$ comprenant, chacun, comme dans le premier mode de réalisation, des jonctions Y optiques 6, des bobines de fibres 10 et étant équipés de modulateurs 7.

On utilise dans ce mode de réalisation alternatif, un unique coupleur 105 comprenant N portes d'entrée 106, 107 et N portes de sortie 109, une porte d'entrée 106 étant reliée à la source 1 et les N-1 autres 107 au photodétecteur 2, et les N portes de sortie 109 étant reliées, respectivement aux interféromètres $I_i$.

Le nombre d'interféromètres $I_i$ peut également être choisi supérieur à trois en conservant exclusivement des coupleurs 2 x 2. L'utilisation exclusive de coupleurs 2 x 2 permet, en particulier, de conserver la polarisation de la lumière.

Un autre mode de réalisation de gyroscope optique selon l'invention, représenté sur la Figure 19, concerne ainsi un gyroscope à quatre axes de mesure.

Le gyroscope 114, selon cet autre mode de réalisation, comporte une source lumineuse 1, un photo-détecteur 2 et quatre interféromètres $I_i$ comprenant les mêmes composants que précédemment.

Le gyroscope 114 comprend trois coupleurs 1/2, 1/2, 145, 146 et 147. Un premier coupleur 145 a une porte d'entrée 148 reliée à la source 1 et une porte d'entrée 149 reliée au photodétecteur 2. Une première de ses portes de sortie 150 est reliée à un second coupleur 146 et la seconde de ses portes de sortie 151 au troisième coupleur 147. Les deux coupleurs 146 et 147 sont situés symétriquement par rapport au montage.

Une porte d'entrée 152 du coupleur 146 est connectée à la porte de sortie 150 du premier coupleur 145, la seconde porte d'entrée 153 du deuxième coupleur 146 étant reliée au photodétecteur 2. Les deux portes de sortie 154 et 155 du deuxième coupleur 146 sont, respectivement, reliées à deux interféromètres $I_1$ et $I_2$. En ce qui concerne le troisième coupleur 147, une portée d'entrée 156 est reliée à la porte de sortie 151 du premier coupleur 145, une porte d'entrée 157 au photodétecteur 2 et les deux portes de sortie 158 et 159, respectivement aux deux autres interféromètres $I_3$ et $I_4$.

La conception de ce montage est telle que les puissances parvenant aux quatre interféromètres $I_i$ sont identiques et que les signaux reçus par le photodétecteur 2 en provenance de ces interféromètres $I_i$ sont équilibrés.

Les deux modes de multiplexage décrits précédemment sont directement applicables à ce gyroscope 114 selon l'invention.

En plus des nombreuses possibilités offertes par la réalisation d'un gyroscope selon le principe de base de l'invention, il est envisageable de coupler plusieurs de ces gyroscopes, ou de les relier à d'autres gyroscopes d'autres types.

Une technique envisageable, représentée sur la Figure 20, consiste en un gyroscope 115 combinant deux gyroscopes à deux axes de mesure chacun, conformes à la description précédente. Cette configuration avec quatre axes de mesure comprend donc deux sources lumineuses 110 et 111, deux photodétecteurs 112 et 113 et quatre interféromètres $I_i$.

Le gyroscope 115 comprend trois coupleurs 2 x 2, 160, 161 et 162, les coupleurs 160 et 161 jouant un rôle symétrique. Un coupleur d'alimentation 162 a ses deux portes d'entrée 163 et 164, respectivement connectées aux sources lumineuses 110 et 111. Ses portes de sorties 165 et 166 sont, respectivement, reliées aux portes d'entrée 167 et 171 des deux autres coupleurs 160 et 161. Le premier coupleur 160 de liaison avec les interféromètres $I_i$ a une porte d'entrée 167 reliée à la porte de sortie 165 du coupleur 162, sa seconde porte d'entrée 168 reliée au premier photodétecteur 112 et ses deux portes de sortie 169 et 170, respectivement à deux des interféromètres $I_1$ et $I_2$. Le second coupleur 161 de liaison avec les interféromètres $I_i$ a une porte d'entrée 171 reliée à la porte de sortie 166 du coupleur 162, sa seconde porte d'entrée 172 au second photodétecteur 113, et ses deux portes de sorties 173 et 174, respectivement aux deux autres interféromètres $I_3$ et $I_4$.

L'utilisation de coupleur 1/2, 1/2 permet lui aussi d'équilibrer les énergies envoyées aux interféromètres $I_i$ et reçues par les photodétecteurs 112, 113 en provenance de ces interféromètres $I_i$.

Par rapport au mode de réalisation précédent, celui-ci nécessite non plus une, mais deux unités électroniques de traitement. Les deux types de multiplexage précédemment décrits sont parfaitement applicables de façon séparée aux ensembles d'interféromètres $I_1$, $I_2$ d'une part, et $I_3$ et $I_4$ d'autre part.

On aboutit ainsi à un schéma de multiplexage deux par deux avec redondance.

## Revendications

1. Procédé de mesure de vitesses de rotation (S) par rapport à N axes, N étant au moins égal à 2, utilisant un gyroscope interférométrique (9) à fibre optique (3) comportant N interféromètres $I_i$ en anneau de Sagnac, deux ondes contrapropagatives se propageant dans chacun desdits interféromètres $I_i$, le temps de propagation des ondes entre leur séparation et leur recombinaison étant $\tau_i$, lesdites durées $\tau_i$ associées aux interféromètres $I_i$ étant sensible-

ment égales à une durée commune de transit $\tau$, ledit procédé étant tel que :

- on émet des signaux par une source lumineuse commune (1) vers l'ensemble des interféromètres $I_i$,
- on détecte lesdits signaux après traversée des interféromètres $I_i$ dans un photodétecteur commun (2),
- on génère par des modulateurs de phase (7) des différences de phase de modulation commandées $\delta\Phi_{c,i}$ entre les ondes contrapropagatives se propageant dans chacun des interféromètres $I_i$,
- on commande les modulateurs (7), on démultiplexe et on démodule des signaux provenant du photodétecteur (2), et on en extrait les vitesses de rotation (S) des interféromètres $I_i$, par une unité de traitement (11),

lesdits signaux émis par la source (1) parvenant à l'ensemble des interféromètres $I_i$, puis au photodétecteur (2), de façon sensiblement simultanée, caractérisé en ce que lesdites différences de phase de modulation commandées $\delta\Phi_{c,i}$ générées par les modulateurs (7) comportent des composantes de mise au biais $\delta\Phi_{m,i}$ (43, 45, 46) de période de modulation commune Tm sensiblement égale au double $2\tau$ de la durée commune de transit $\tau$, et d'amplitude commune égale à un biais de phase non multiple de $\pi$, la valeur de chaque composante de mise au biais $\delta\Phi_{m,i}$ à un instant t étant opposée à celle de ladite composante à l'instant $t + T_m/2$, chaque demi-période Tm/2 étant divisée en au moins N intervalles de temps $\delta t_i$, et en ce qu'on produit un changement de signe de la composante de mise au biais $\delta\Phi_{m,i}$ (42, 45, 46) associée à chaque interféromètre $I_i$, au début d'un et d'un seul des intervalles de temps $\delta t_i$, de façon qu'un signal parvenant à l'unité de traitement (11) est affecté simultanément par des déphasages Sagnac $\delta\Phi_{s,i}$ représentatifs des vitesses de rotation (S) de l'ensemble des interféromètres $I_i$, se rajoutant aux différences de phase de modulation $\delta\Phi_{c,i}$, lesdits déphasages Sagnac $\delta\Phi_{s,i}$ étant extraits par l'unité de traitement (11) par un échantillonnage dudit signal sur les N intervalles de temps $\delta t_i$.

2. Procédé de mesure selon la revendication 1, caractérisé en ce que pour démultiplexer et démoduler lesdits signaux provenant du photodétecteur (2), on applique par un circuit électronique (65) de démultiplexage et de démodulation de l'unité de traitement (11), des signaux $D_i$ de démultiplexage et de démodulation de périodes égales à la période de modulation commune $T_m$, tels que le signal $D_i$ de démultiplexage et de démodulation associé à chacun des interféromètres $I_i$ vaut 1 sur l'intervalle de temps $\delta t_i$ de changement de signe correspondant, 0 de l'intervalle $\delta t_{i+1}$ suivant au $(N-2)^{ème}$ intervalle $\delta t_{N+i-2}$ suivant, 1 sur le $(N-1)^{ème}$ intervalle $\delta t_{N+i-1}$ suivant, -1 sur le $N^{ème}$ intervalle $\delta t_{N+i}$ suivant, 0 du $(N+1)^{ème}$ $\delta t_{N+i+1}$ au $(2N-2)^{ème}$ $\delta t_{2N+i-2}$ intervalles suivants, et -1 sur le $(2N-1)^{ème}$ intervalle $\delta t_{2N+i-1}$ suivant.

3. Procédé de mesure selon l'une des revendications 1 ou 2, caractérisé en ce qu'on produit ladite différence de phase de modulation commandée $\delta\Phi_{c,i}$ générée dans chaque interféromètre $I_i$ par les modulateurs (7) en appliquant simultanément un même déphasage de modulation commandé $\Phi_{c,i}$ aux deux ondes contrapropagatives se propageant dans ledit interféromètre $I_i$, lesdites ondes contrapropagatives se recombinant après un décalage temporel égal à la durée de transit $\tau$, ledit déphasage $\Phi_{c,i}$ déterminant ladite différence de phase $\delta\Phi_{c,i}$, ledit déphasage de modulation $\Phi_{c,i}$ comportant une composante de mise au biais $\Phi_{m,i}$ (40) de période égale à la période de modulation $T_m$, ladite composante de mise au biais $\Phi_{m,i}$ (40) étant la somme d'un terme d'oscillation $\Phi_{o,i}$ et d'un terme de décalage constant $\Phi_{d,i}$, la valeur dudit terme d'oscillation $\Phi_{o,i}$ à un instant t étant opposée à celle à l'instant $t + T_m/2$, ledit terme d'oscillation $\Phi_{o,i}$ ayant une amplitude égale à la moitié du biais de phase, et changeant de signe au début dudit intervalle de temps $\delta t_i$ correspondant audit interféromètre $I_i$.

4. Procédé de mesure selon l'une quelconque des revendications 1 à 3, caractérisé en ce que ledit biais de phase vaut $\pi/2$.

5. Procédé de mesure selon l'une quelconque des revendications 1 à 4, caractérisé en ce que lesdits intervalles de temps $\delta t_i$ sont égaux et valent 1/N de ladite période de modulation $T_m/2$.

6. Procédé de mesure selon la revendication 5, caractérisé en ce qu'on applique un signal de sortie parvenant à l'unité de traitement (11), une porte périodique (80) de traitement de signal, consistant en une modulation d'amplitude avec une période de porte égale à 1/(2N) de la période de modulation $T_m$, laissant ledit signal inchangé pendant une partie de chaque période de porte centrée sur un desdits intervalles de temps $\delta t_i$, et l'annulant pendant l'autre partie ($d_6$) de ladite période, de façon à atténuer les effets parasites (135, 136, 137) dus à des écarts entre la demi-période de modulation $T_m/2$ et les périodes propres $\tau_i$ des interféromètres $I_i$.

7. Procédé de mesure selon l'une quelconque des revendications 5 et 6, caractérisé en ce qu'on agit sur un signal émis par la source (1) par un montage électronique (85) de modulation relié à ladite source (1), ledit montage (85) appliquant au signal une extinction séquentielle à une période d'extinction égale à 1/(2N) de la période de modulation $T_m$, de façon à atténuer les effets parasites (81, 82) dus à des écarts entre la demi-période de modulation $T_m/2$ et les périodes propres $\tau_i$ des interféromètres $I_i$.

8. Procédé de mesure selon l'une quelconque des revendications précédentes, caractérisé en ce que pour chaque interféromètre $I_i$, on compense un éventuel déphasage Sagnac $\delta\Phi_{s,i}$ dû à une rotation dudit interféromètre $I_i$ et s'ajoutant à la composante de mise au biais $\delta\Phi_{m,i}$ de la différence de phase de modulation commandée $\delta\Phi_{c,i}$ associée, par une composante de contre-réaction $\delta\Phi_{cr,i}$ de la différence de phase de modulation $\delta\Phi_{c,i}$, la somme $\delta\Phi_{s,i} + \delta\Phi_{cr,i}$ du déphasage Sagnac $\delta\Phi_{s,i}$ et de la composante de contre-réaction $\delta\Phi_{cr,i}$ étant constamment asservie à zéro, de façon que lesdites rotations des interféromètres $I_i$ sont déduites des composantes de contre-réaction $\delta\Phi_{cr,i}$.

9. Gyroscope interférométrique (9) à fibre optique (3) permettant la mesure de vitesses de rotation (S) par rapport à N axes, N étant au moins égal à 2, comportant:

- N interféromètres $I_i$ en anneau de Sagnac, deux ondes contrapropagatives se propageant dans chacun desdits interféromètres $I_i$, le temps de propagation des ondes entre leur séparation et leur recombinaison étant une durée de transit $\tau_i$, lesdites durées $\tau_i$ associées aux interféromètres $I_i$ étant approximativement égales à une durée commune de transit $\tau$,
- une source lumineuse commune (1),
- un photodétecteur commun (2),
- des modulateurs de phase (7) générant des différences $\delta\Phi_{c,i}$ de phase de modulation commandées entre les ondes contrapropagatives se propageant dans chacun des interféromètres $I_i$,
- une unité de traitement (11) commandant lesdits modulateurs (7), recevant des signaux provenant du photodétecteur (2), démultiplexant et démodulant lesdits signaux, et fournissant les vitesses de rotation (S) desdits interféromètres $I_i$;

caractérisé en ce que les modulateurs de phase sont adaptés à générer lesdites différences de phase de modulation commandées $\delta\Phi_{c,i}$ de sorte qu'elles comportent des composantes de mise au biais $\delta\Phi_{m,i}$ (43, 45, 46) de période de modulation commune $T_m$ sensiblement égale au double $2\tau$ de la durée commune de transit $\tau$, et d'amplitude commune égale à un biais de phase non multiple de $\pi$, la valeur de chaque composante de mise au biais

$\delta\Phi_{m,i}$ à un instant t étant opposée à celle de ladite composante à l'instant $t + T_m/2$, chaque demi-période $T_m/2$ étant divisée en au moins N intervalles de temps $\delta t_i$, et en ce que le modulateur (7) de chaque interféromètre $I_i$ produit un changement de signe de la composante de mise au biais $\delta\Phi_{m,i}$ associée, au début d'un et d'un seul des intervalles de temps $\delta t_i$, de façon qu'un signal parvenant à l'unité de traitement (11) est affecté simultanément par des déphasages Sagnac $\delta\Phi_{s,i}$ représentatifs des vitesses de rotation (S) de l'ensemble des interféromètres $I_i$, se rajoutant aux différences de phase de modulation $\delta\Phi_{c,i}$, lesdits déphasages Sagnac $\delta\Phi_{s,i}$ étant extraits par l'unité de traitement (11) par un échantillonnage dudit signal sur les N intervalles de temps $\delta t_i$.

10. Gyroscope (9) selon la revendication 9, caractérisé en ce qu'il comporte un ensemble de coupleurs (4, 5) reliant la source (1), le photodétecteur (2) et les interféromètres $I_i$, ledit ensemble de coupleurs (4, 5) présentant N portes d'entrée (120, 121, 125) et N portes de sortie (122, 126, 127), une porte d'entrée (120) étant connectée à la source (1) et N - 1 portes d'entrée (121, 125) au photodétecteur (2), et les N portes de sortie (122, 126, 127) étant connectées, respectivement, aux interféromètres $I_i$.

11. Gyroscope (108) selon la revendication 10, caractérisé en ce qu'il comprend un unique coupleur (105) comportant N portes d'entrée (106, 107) et N portes de sortie (109).

12. Gyroscope (9, 114) selon la revendication 10, caractérisé en ce que lesdits coupleurs (4, 5, 145, 146, 147) comportent, chacun, deux portes d'entrée (120, 121, 124, 125, 148, 149, 152, 153, 156, 157) et deux portes de sortie (122, 123, 126, 127, 150, 151, 154, 155, 158, 159), et forment un ensemble arborescent.

13. Gyroscope (108) selon la revendication 12, caractérisé en ce qu'il comprend deux interféromètres ($I_1$, $I_2$) et un coupleur (105), ledit coupleur (105) 1/2, 1/2, partageant une puissance incidente sur une première porte d'entrée (106) connectée à la source (1), en deux puissances transmises respectivement aux deux portes de sortie (109) connectées aux deux interféromètres ($I_1$, $I_2$), égales chacune à la moitié de ladite puissance incidente, de façon que les deux interféromètres ($I_1$, $I_2$) reçoivent chacun une même puissance lumineuse et que des signaux issus desdits interféromètres ($I_1$, $I_2$) et reçus par le photodétecteur (2) soient équilibrés.

14. Gyroscope (9) selon la revendication 12, caractérisé en ce qu'il comprend trois interféromètres ($I_1$, $I_2$, $I_3$) et deux coupleurs (4, 5), un premier (4) de ces coupleurs ayant deux portes d'entrée (120, 121), respectivement connectées à ladite source (1) et audit photodétecteur (2), une porte de sortie (122) connectée à un premier desdits interféromètres ($I_1$) et une autre porte de sortie (123) connectée à une première porte d'entrée (124) du second coupleur (5), le second coupleur (5) 1/2, 1/2 ayant une seconde porte d'entrée (125) connectée au photodétecteur (2), et les portes de sortie (126, 127) respectivement aux deux autres interféromètres ($I_2$, $I_3$), le premier coupleur (4) 1/3, 2/3 partageant une puissance incidente sur la porte d'entrée (120) connectée à la source en une première puissance transmise à la porte de sortie (122) connectée au premier interféromètre ($I_1$) égale au tiers de ladite puissance incidente, et en une seconde puissance transmise à la porte de sortie (123) connectée à la première porte d'entrée (124) du second coupleur (5) égale aux deux tiers de ladite puissance incidente, de façon que les trois interféromètres ($I_1$, $I_2$, $I_3$) reçoivent chacun une même puissance lumineuse et que des signaux issus desdits interféromètres et reçus par le photodétecteur (2) soient équilibrés.

15. Gyroscope (9, 108, 114) selon l'une quelconque des revendications 9 à 14, caractérisé en ce que des polariseurs sont interposés entre les coupleurs et les interféromètres $I_i$.

16. Gyroscope (9, 108, 114) selon l'une quelconque des revendications 9 à 15, caractérisé en ce qu'il est couplé à d'autres gyroscopes.

17. Gyroscope (108) selon la revendication 16, caractérisé en ce qu'il est couplé à un second gyroscope (108) vérifiant l'une quelconque des revendications précédentes, par le biais d'un coupleur (162) comportant deux portes d'entrée (163, 164) et deux portes de sortie (165, 166), les deux portes d'entrée (163, 164) étant connectées respectivement aux deux sources lumineuses (110, 111) desdits gyroscopes (108), et les deux portes de sortie (165, 166) étant connectées respectivement aux deux gyroscopes (108) et leur envoyant des signaux optiques.

**Patentansprüche**

1. Verfahren zur Messung von Drehgeschwindigkeiten (S) in bezug auf N Achsen, wobei N mindestens gleich 2 ist, unter Verwendung eines Interferenzkreisels (9) mit optischer Faser (3), bestehend aus N Interferometern $I_i$ in Sagnac-Ring-Form, zwei Gegenausbreitungswellen, die sich in jedem der Interferometer $I_i$ ausbreiten, wobei die Ausbreitungszeit der Wellen zwischen ihrer Trennung und ihrer Wiedervereinigung $\tau_i$ ist, wobei die den Interferometern $I_i$ zugeordneten Zeiten $\tau_i$ im wesentlichen gleich einer gemeinsamen Durchgangszeit $\tau$ sind, wobei das Verfahren darin besteht, daß:

- Signale von einer gemeinsamen Lichtquelle (1) zu der Gesamtheit der Interferometer $I_i$ ausgesandt werden;
- diese Signale nach dem Durchqueren der Interferometer $I_i$ in einem gemeinsamen Photodetektor (2) erfaßt werden;
- durch Phasenmodulatoren (7) gesteuerte Modulationsphasenunterschiede $\delta\phi_{c,i}$ zwischen den Gegenausbreitungswellen, die sich in jedem der Interferometer $I_i$ ausbreiten, erzeugt werden;
- die Modulatoren (7) gesteuert werden, Signale, die von dem Photodetektor (2) kommen, einem Demultiplexing und einer Demodulation unterzogen werden, und die Drehgeschwindigkeiten (S) der Interferometer $I_i$ durch eine Bearbeitungseinheit (11) entnommen werden;

wobei die von der Quelle (1) ausgesandten Signale zu der Gesamtheit der Interferometer $I_i$, sodann zu dem Photodetektor (2) im wesentlichen gleichzeitig gelangen,

dadurch gekennzeichnet, daß die gesteuerten Modulationsphasenunterschiede $\delta\phi_{c,i}$, die von den Modulatoren (7) erzeugt werden, Verzerrungskomponenten $\delta\phi_{m,i}$ (43, 45, 46) mit einer gemeinsamen Modulationszeit $T_m$, die im wesentlichen gleich dem Doppelten $2\tau$ der gemeinsamen Durchgangszeit $\tau$ ist, und eine gemeinsame Amplitude, die gleich einer Phasenverzerrung ist, die ein Nicht-Vielfaches von $\pi$ ist, umfassen, wobei der Wert jeder Verzerrungskomponente $\delta\phi_{m,i}$ zu einem Zeitpunkt t jenem der Komponenten zu dem Zeitpunkt $t + T_m/2$ entgegengesetzt ist, wobei jede Halbperiode $T_m/2$ in mindestens N Zeitintervalle $\delta t_i$ unterteilt wird, und daß die Verzerrungskomponente $\delta\phi_{m,i}$ (42, 45, 46), die jedem Interferometer $I_i$ zugeordnet ist, zu Beginn eines unterschiedlichen Zeitintervalls $\delta t_i$ das Vorzeichen ändert, so daß ein Signal, das zu der Bearbeitungseinheit (11) gelangt, gleichzeitig von Sagnac-Phasenverschiebungen $\delta\phi_{s,i}$ betroffen ist, die für die Drehgeschwindigkeiten (S) der Gesamtheit der Interferometer $I_i$ repräsentativ sind und sich zu den Modulationsphasenunterschieden $\delta\phi_{c,i}$ hinzufügen, wobei diese Sagnac-Phasenverschiebungen $\delta\phi_{s,i}$ von der Bearbeitungseinheit (11) durch ein Sampling des Signals an den N Zeitintervallen $\delta t_i$ entnommen werden.

2. Meßverfahren nach Anspruch 1, dadurch gekennzeichnet, daß für das Demultiplexing und die Demodulation dieser Signale, die von dem Photodetektor (2) kommen, durch eine elektronische Demultiplexing- und Demodulationsschaltung (65) der Bearbeitungseinheit (11) Demultiplexing- und De-

modulationssignale $D_i$ mit gleichen Perioden wie die gemeinsame Modulationsperiode $T_m$ angelegt werden, derart, daß das Demultiplexing- und Demodulationssignal $D_i$, das jedem der Interferometer $I_i$ zugeordnet ist, 1 beträgt auf dem entsprechenden Zeitintervall $\delta t_i$ der Vorzeichenänderung, 0 beträgt von dem folgenden Intervall $\delta t_{i+1}$ zum folgenden (N-2). Intervall $\delta t_{N+i-2}$, 1 beträgt auf dem folgenden (N-1). Intervall $\delta t_{N+i-1}$, -1 beträgt auf dem folgenden N. Intervall $\delta t_{N+i}$, 0 beträgt von dem folgenden (N+1). Intervall $\delta t_{N+i+1}$ zum (2N-2). Intervall $\delta t_{2N+i-2}$, und -1 beträgt auf dem folgenden (2N-1). Intervall $\delta t_{2N+i-1}$.

3. Meßverfahren nach einem der Ansprüche 1 oder 2, dadurch gekennzeichnet, daß der gesteuerte Modulationsphasenunterschied $\delta\phi_{c,i}$, der in jedem Interferometer $I_i$ von den Modulatoren (7) erzeugt wird, hergestellt wird, indem gleichzeitig eine gleiche gesteuerte Modulationsphasenverschiebung $\phi_{c,i}$ an beide Gegenausbreitungswellen, die sich in dem Interferometer $I_i$ ausbreiten, angelegt wird, daß sich diese Gegenausbreitungswellen nach einer zeitlichen Verschiebung, die gleich der Durchgangszeit $\tau$ ist, wieder vereinigen, daß die Phasenverschiebung $\phi_{c,i}$ den Phasenunterschied $\delta\phi_{c,i}$ bestimmt, daß die Modulationsphasenverschiebung $\phi_{c,i}$ eine Verzerrungskomponente $\phi_{m,i}$ (40) mit einer Periode gleich der Modulationsperiode $T_m$ umfaßt, daß die Verzerrungskomponente $\phi_{m,i}$ (40) die Summe eines Schwingungsterms $\phi_{o,i}$ und eines konstanten Verschiebungsterms $\phi_{d,i}$ ist, daß der Wert des Schwingungsterms $\phi_{o,i}$ zu einem Zeitpunkt t jenem zum Zeitpunkt $t + T_m/2$ entgegengesetzt ist und daß wobei der Schwingungsterm $\phi_{o,i}$ eine Amplitude gleich der Hälfte der Verzerrungsphase aufweist und zu Beginn des Zeitintervalls $\delta t_i$, der dem Interferometer $I_i$ entspricht, das Vorzeichen ändert.

4. Meßverfahren nach einem der Ansprüche 1 bis 3, dadurch gekennzeichnet, daß die Phasenverzerrung gleich $\pi/2$ ist.

5. Meßverfahren nach einem der Ansprüche 1 bis 4, dadurch gekennzeichnet, daß die Zeitintervalle $\delta t_i$ gleich sind und 1/N von der Modulationsperiode $T_m/2$ betragen.

6. Meßverfahren nach Anspruch 5, dadurch gekennzeichnet, daß ein Ausgangssignal, das zu der Bearbeitungseinheit (11) gelangt, angelegt wird und daß ein periodisches Signalbearbeitungstor (80), das in einer Amplitudenmodulation mit einer Torperiode gleich 1/(2N) der Modulationsperiode $T_m$ besteht, dieses Signal während eines Teils jeder Torperiode, der auf einen der Zeitintervalle $\delta t_i$ zentriert ist, unverändert läßt und es während des anderen Teils ($d_6$) dieser Periode löscht, so daß die Störeffekte (135, 136, 137) aufgrund der Abweichungen

zwischen der Halbmodulationsperiode $T_m/2$ und den Eigenperioden $\tau_i$ der Interferometer $I_i$ gemildert werden.

7. Meßverfahren nach einem der Ansprüche 5 und 6, dadurch gekennzeichnet, daß auf ein von der Quelle (1) ausgesandtes Signal durch eine elektronische Modulationsschaltung (85), die mit der Quelle (1) verbunden ist, eingewirkt wird, daß diese Schaltung (85) an das Signal eine sequentielle Löschung mit einer Löschperiode gleich 1/(2N) der Modulationsperiode $T_m$ anlegt, so daß die Störeffekte (81, 82) aufgrund der Abweichungen zwischen der Halbmodulationsperiode $T_m/2$ und den Eigenperioden $\tau_i$ der Interferometer $I_i$ gemildert werden.

8. Meßverfahren nach einem der vorhergehenden Ansprüche, dadurch gekennzeichnet, daß für jedes Interferometer $I_i$ eine eventuelle Sagnac-Phasenverschiebung $\delta\phi_{s,i}$ aufgrund einer Drehung des Interferometers $I_i$, die zu der Verzerrungskomponente $\delta\phi_{m,i}$ des zugehörigen gesteuerten Modulationsphasenunterschiedes $\delta\phi_{c,i}$ hinzukommt, durch eine Gegenreaktionskomponente $\delta\phi_{cr,i}$ des Modulationsphasenunterschiedes $\delta\phi_{c,i}$ ausgeglichen wird und daß die Summe $\delta\phi_{s,i} + \delta\phi_{cr,i}$ der Sagnac-Phasenverschiebung $\delta\phi_{s,i}$ und der Gegenreaktionskomponente $\delta\phi_{cr,i}$ konstant auf Null gesteuert wird, so daß die Drehungen der Interferometer $I_i$ von den Gegenreaktionskomponenten $\delta\phi_{cr,i}$ abgeleitet werden.

9. Interferenzkreisel (9) mit optischer Faser (3), der die Messung von Drehgeschwindigkeiten (S) in bezug auf N Achsen ermöglicht, wobei N mindestens gleich 2 ist, bestehend aus:

   - N Interferometern $I_i$ in Sagnac-Ring-Form, wobei sich zwei Gegenausbreitungswellen in jedem der Interferometer $I_i$ ausbreiten, die Ausbreitungszeit der Wellen zwischen ihrer Trennung und ihrer Wiedervereinigung eine Durchgangszeit $\tau_i$ ist und die den Interferometern $I_i$ zugeordneten Zeiten $\tau_i$ im wesentlichen gleich einer gemeinsamen Durchgangszeit $\tau$ sind,
   - einer gemeinsamen Lichtquelle (1),
   - einem gemeinsamen Photodetektor (2),
   - Phasenmodulatoren (7), die gesteuerte Modulationsphasenunterschiede $\delta\phi_{c,i}$ zwischen den Gegenausbreitungswellen, die sich in jedem der Interferometer $I_i$ ausbreiten, erzeugen,
   - einer Bearbeitungseinheit (11), die die Modulatoren (7) steuert, die Signale, die von dem Photodetektor (2) kommen, empfängt, diese einem Demultiplexing und einer Demodulation unterzieht, und die Drehgeschwindigkeiten (S) der Interferometer $I_i$ liefert,

dadurch gekennzeichnet, daß die Phasenmodulatoren derart ausgeführt sind, daß sie die gesteuerten Modulationsphasenunterschiede $\delta\phi_{c,i}$ erzeugen, so daß sie Verzerrungskomponenten $\delta\phi_{m,i}$ (43, 45, 46) mit einer gemeinsamen Modulationszeit $T_m$, die im wesentlichen gleich dem Doppelten $2\tau$ der gemeinsamen Durchgangszeit $\tau$ ist, und eine gemeinsame Amplitude umfassen, die gleich einer Phasenverzerrung ist, die ein Nicht-Vielfaches von $\pi$ ist, wobei der Wert jeder Verzerrungskomponente $\delta\phi_{m,i}$ zu einem Zeitpunkt t jenem der Komponente zu dem Zeitpunkt $t + T_m/2$ gegenübersteht, wobei jede Halbperiode $T_m/2$ in mindestens N Zeitintervalle $\delta t_i$ unterteilt wird, und daß der Modulator (7) jedes Interferometers $I_i$ eine Vorzeichenänderung der Verzerrungskomponente $\delta\phi_{m,i}$ zu Beginn eines unterschiedlichen Zeitintervalls $\delta t_{ti}$ erzeugt, so daß ein Signal, das zu der Bearbeitungseinheit (11) gelangt, gleichzeitig von Sagnac-Phasenverschiebungen $\delta\phi_{s,i}$ betroffen ist, die für die Drehgeschwindigkeiten (S) der Gesamtheit der Interferometer $I_i$ repräsentativ sind und sich zu den Modulationsphasenunterschieden $\delta\phi_{c,i}$ hinzufügen, wobei diese Sagnac-Phasenverschiebungen $\delta\phi_{s,i}$ von der Bearbeitungseinheit (11) durch ein Sampling des Signals an den N Zeitintervallen $\delta t_i$ entnommen werden.

10. Kreisel (9) nach Anspruch 9, dadurch gekennzeichnet, daß er eine Einheit von Kopplern (4, 5) umfaßt, die die Quelle (1), den Photodetektor (2) und die Interferometer $I_i$ verbinden, daß diese Einheit von Kopplern (4, 5) N Eingangstoren (120, 121, 125) und N Ausgangstoren (122, 126, 127) aufweist, daß ein Eingangstor (120) mit der Quelle (1) und N-1 Eingangstoren (121, 125) mit dem Photodetektor (2) verbunden sind und daß N Ausgangstore (122, 126, 127) jeweils mit den Interferometern $I_i$ verbunden sind.

11. Kreisel (108) nach Anspruch 10, dadurch gekennzeichnet, daß er einen einzigen Koppler (105) umfaßt, der N Eingangstore (106, 107) und N Ausgangstore (109) umfaßt.

12. Kreisel (9, 114) nach Anspruch 10, dadurch gekennzeichnet, daß die Koppler (4, 5, 145, 146, 147) jeweils zwei Eingangstore (120, 121, 124, 125, 148, 149, 152, 153, 156, 157) und zwei Ausgangstore (122, 123, 126, 127, 150, 151, 154, 155, 158, 159) umfassen und eine verzweigte Einheit bilden.

13. Kreisel (108) nach Anspruch 12, dadurch gekennzeichnet, daß er zwei Interferometer ($I_1$, $I_2$) und einen Koppler (105) umfaßt, wobei der Koppler (105) 1/2, 1/2 eine auf ein erstes, mit der Quelle (1) verbundenes Eingangstor (106) eintreffende Leistung in zwei Leistungen teilt, die jeweils an die beiden Ausgangstore (109), die mit den beiden Interfero-

metern ($I_1$, $I_2$) verbunden sind, übertragen werden, wobei jede Leistung gleich der Hälfte der eintreffenden Leistung ist, so daß die beiden Interferometer ($I_1$, $I_2$) jeweils eine selbe Lichtleistung empfangen und die von den Interferometern ($I_1$, $I_2$) ausgesandten und von dein Photodetektor (2) empfangenen Signale ausgeglichen sind.

14. Kreisel (9) nach Anspruch 12, dadurch gekennzeichnet, daß er drei Interferometer ($I_1$, $I_2$, $I_3$) und zwei Koppler (4, 5) umfaßt, wobei ein erster (4) dieser Koppler zwei Eingangstore (120, 121) aufweist, die jeweils mit der Quelle (1) und dem Photodetektor (2) verbunden sind, ein Ausgangstor (122), das mit einem ersten der Interferometer ($I_1$) verbunden ist, und ein weiteres Ausgangstor (123), das mit einem ersten Eingangstor (124) des zweiten Kopplers (5) verbunden ist, daß der zweite Koppler (5) 1/2, 1/2 ein zweites Eingangstor (125) aufweist, das mit dem Photodetektor (2) verbunden ist, und daß die Ausgangstore (126, 127) jeweils mit den beiden anderen Interferometern ($I_2$, $I_3$) verbunden sind, daß der erste Koppler (4) 1/3, 2/3 eine Leistung, die auf das mit der Quelle verbundene Eingangstor (120) trifft, in eine erste Leistung, die auf das Ausgangstor (122), das mit dem ersten Interferometer ($I_1$) verbunden ist, übertragen wird und gleich einem Drittel der eintreffenden Leistung ist, und in eine zweite Leistung teilt, die auf das Ausgangstor (123), das mit dem ersten Eingangstor (124) des zweiten Kopplers (5) verbunden ist, übertragen wird und gleich zwei Drittel der eintreffenden Leistung ist, so daß die drei Interferometer ($I_1$, $I_2$, $I_3$) jeweils eine gleiche Lichtleistung empfangen und die von den Interferometern ausgesandten und von dem Photodetektor (2) erhaltenen Signale ausgeglichen sind.

15. Kreisel (9, 108, 114) nach einem der Ansprüche 9 bis 14, dadurch gekennzeichnet, daß Polarisatoren zwischen den Kopplern und den Interferometern $I_i$ angeordnet sind.

16. Kreisel (9, 108, 114) nach einem der Ansprüche 9 bis 15, dadurch gekennzeichnet, daß er mit anderen Kreiseln gekoppelt ist.

17. Kreisel (108) nach Anspruch 16, dadurch gekennzeichnet, daß er mit einem zweiten Kreisel (108), der einem der vorhergehenden Ansprüche enspricht, mit Hilfe eines Kopplers (162) gekoppelt ist, der zwei Eingangstore (163, 164) und zwei Ausgangstore (165, 166) umfaßt, daß die beiden Eingangstore (163, 164) jeweils mit den beiden Lichtquellen (110, 111) der Kreisel (108) verbunden sind und daß die beiden Ausgangstore (165, 166) jeweils mit den beiden Kreiseln (108) verbunden sind und ihnen optische Signale senden.

## Claims

1. Process for measurement of rotation speeds (5) about N axes, where N is not less than 2, using a fiber optic interferometric gyroscope (3) comprising N interferometers $I_i$ in Sagnac ring, two counter-propagating waves propagating in each of the said interferometers $I_i$, the wave propagation time between their separation and recombination being $\tau_i$, the said duration $\tau_i$ associated with interferometers $I_i$ being approximately equal to a common transit duration $\tau$, the said process being such that :

   - signals are emitted by a common light source (1) to all interferometers $I_i$,
   - the said signals are detected after passing through interferometers $I_i$ in a common photo-detector (2),
   - phase modulators (7) generate controlled modulation phase differences $\delta\Phi_{c,i}$ between the counter-propagating waves propagating in each of interferometers $I_i$,
   - modulators (7) are controlled, signals originating from the photodetector (2) are demultiplexed and demodulated, and rotation speeds (5) of interferometers $I_i$ are extracted by a processing unit (11),

   the said signals emitted by the source (1) reaching all interferometers $I_i$, then photodetector (2), almost simultaneously,

   characterised in that the said controlled modulation phase differences $\delta\Phi_{c,i}$ generated by modulators (7) comprise biasing components $\delta\Phi_{m,i}$ (43, 45, 46) with a common modulation period $T_m$ approximately equal to twice $2\tau$ the common transit duration $\tau$, and with common amplitude equal to a phase bias that is not a multiple of $\pi$, the value of each biasing component $\delta\Phi_{m,i}$ at time t being opposite to the value of the said component at time t + $T_m/2$, each half-period $T_m/2$ being divided into at least N time intervals $\delta t_i$ and in that the biasing component $\delta\Phi_{m,i}$ (42, 45, 46) associated with each interferometer $I_i$ is modified in sign at the beginning of one different of time intervals $\delta t_i$, such that a signal arriving at the processing unit (11) is affected simultaneously by Sagnac phase shifts $\delta\Phi_{s,i}$ representing rotation speeds (5) of the set of interferometers $I_i$, and is added to the modulation phase differences $\delta\Phi_{c,i}$, the said Sagnac phase shifts $\delta\Phi_{c,i}$ being extracted by the processing unit (11) by sampling the said signal on the N time intervals $\delta t_i$.

2. Measurement process according to claim 1, characterised in that in order to demultiplex and demodulate the said signals from the photodetector (2), demultiplexing and demodulation signals $D_i$ with periods equal to the common modulation period $T_m$ are applied through an electronic demultiplexing and demodulation circuit (65) in the processing unit (11), such that the demultiplexing and demodulation signal $D_i$ associated with each interferometer $I_i$ is equal to 1 for the time interval $\delta t_i$ for the corresponding sign change, 0 from the next $\delta t_{i+1}$ interval to the (N-2)th $\delta t_{N+i-2}$ interval following, 1 in the next (N-1) th $\delta t_{N+i-1}$ interval, -1 in the next Nth $\delta t_{N+i}$ interval, 0 from the (N+1)th $\delta t_{N+i+1}$ interval to the (2N-2)th $\delta t_{2N+i-2}$ interval following, and -1 in the next (2N-1) th $\delta t_{2N+i-1}$ interval.

3. Measurement process according to one of claims 1 or 2, characterised in that the said controlled modulation phase difference $\delta\Phi_{c,i}$ generated in each interferometer $I_i$ is produced by modulators (7) by simultaneously applying the same controlled modulation phase shift $\Phi_{c,i}$ to the two counter-propagating waves propagating in the said interferometer $I_i$, the said counter-propagating waves recombining after a time shift equal to the transit duration $\tau$, the said phase shift $\Phi_{c,i}$ determining the said phase difference $\delta\Phi_{c,i}$, the said modulation phase shift $\Phi_{c,i}$ comprising a biasing component $\Phi_{m,i}$ (40) with a period equal to the modulation period $T_m$, the said biasing component $\Phi_{m,i}$ (40) being the sum of an oscillation therm $\Phi_{o,i}$, and a constant offset term $\Phi_{d,i}$, the value of the said oscillation term $\Phi_{o,i}$ at time t being opposite to its value at time t + $T_m/2$, the said oscillation term $\Phi_{o,i}$ having an amplitude equal to half of the phase bias, and changing sign at the beginning of the said time interval $\delta t_i$ corresponding to the said interferometer $I_i$.

4. Measurement process according to any one of claims 1 to 3 characterised in that the said phase bias is equal to $\pi/2$.

5. Measurement process according to any one of claims 1 to 4 characterised in that the said time intervals $\delta t_i$ are equal and are 1/N of the said modulation period $T_m/2$.

6. Measurement process according to claim 5, characterised in that an output signal is applied that reaches the processing unit (11), a periodic signal processing gate (80), consisting of an amplitude modulation with a gate period equal to 1/(2N) of the modulation period $T_m$, leaving the said signal unchanged for a part of each gate period centered on one of the said time intervals $\delta t_i$, and cancelling it during the other part ($d_6$) of the said period, so as to attenuate parasite effects (135, 136, 137) due to differences between the half-modulation period $T_m/2$ and natural periods $\tau_i$ of interferometers $I_i$.

7. Measurement process according to any one of claims 5 and 6 characterised in that a signal emitted by source (1) is acted upon by an electronic modulation circuit (85) connected to the said source (1), the said circuit (85) applying to the signal a sequential extinction at an extinction period equal to 1/(2N) of the modulation period $T_m$, so as to attenuate parasite effects (81, 82) due to differences between the half-modulation period $T_m/2$ and the natural periods $\tau_i$ of interferometers $I_i$.

8. Measurement process according to any one of the previous claims characterised in that for each interferometer $I_i$, any Sagnac phase shift $\delta\Phi_{s,i}$ caused by rotation of the said interferometer $I_i$ and added to the biasing component $\delta\Phi_{m,i}$ of the associated controlled modulation phase difference $\delta\Phi_{c,i}$ is compensated by a counter-reaction component $\delta\Phi_{cr,i}$ equal to the modulation phase difference $\delta\Phi_{c,i}$, the sum $\delta\Phi_{s,i} + \delta\Phi_{cr,i}$ of the Sagnac phase shift $\delta\Phi_{s,i}$ and the counter-reaction component $\delta\Phi_{cr,i}$ being countinuously servocontrolled to zero, such that the said interferometer rotations $I_i$ are deduced from the counter-reaction components $\delta\Phi_{cr,i}$.

9. Interferometric gyroscope (9) with optical fiber (3) used to measure rotation speeds (5) about N axes, where N is not less than 2, comprising :

  - N interferometers $I_i$ in Sagnac ring, two counter-propagating waves propagating in each of the said interferometers $I_i$, the propagation time for the waves between their separation and recombination having a transit duration $\tau_i$, the said durations $\tau_i$ associated with interferometers $I_i$ being approximately equal to a common transit duration $\tau$,
  - a common light source (1),
  - a common photodetector (2),
  - phase modulators (7) generating controlled modulation phase differences $\delta\Phi_{c,i}$ between the counter-propagating waves propagating in each of the interferometers $I_i$,
  - a processing unit (11) controlling the said modulators (7), receiving signals from the photodetector (2), demultiplexing and demodulating the said signals, and providing rotation speeds (5) of the said interferometers $I_i$,

  characterised in that the phase modulators are liable to generate the said controlled modulation phase differences $\delta\Phi_{c,i}$ such that they comprise biasing components $\delta\Phi_{m,i}$ (43, 45, 46) with a common modulation period $T_m$ practically equal to twice $2\tau$ the common transit duration $\tau$, and with a common amplitude equal to a phase bias which is not a multiple of $\pi$, the value of each biasing component $\delta\Phi_{m,i}$ at time t being opposed to the value of the said component at time $t + T_m/2$, each half-period $T_m/2$ being divided into at least N time intervals $\delta t_i$, and in that

the modulator (7) for each interferometer $I_i$ produces a sign change in the associated biasing component $\delta\Phi_{m,i}$, at the beginning of one different of the time intervals $\delta t_i$, such that a signal arriving at the processing unit (11) is simultaneously affected by Sagnac phase shifts $\delta\Phi_{s,i}$ representing rotation speeds (5) of all interferometers $I_i$, and is added to the modulation phase differences $\delta\Phi_{c,i}$, the said Sagnac phase shifts $\delta\Phi_{s,i}$ being extracted by the processing unit (11) by sampling the said signal on the N time intervals $\delta t_i$.

10. Gyroscope (9) according to claim 9, characterised in that it comprises a set of couplers (4, 5) connecting the source (1), the photodetector (2) and interferometers $I_i$, the said set of couplers (4, 5) having N input gates (120, 121, 125) and N output gates (122, 126, 127) one input gate (120) being connected to the source (1) and N-1 input gates (121, 125) being connected to the photodetector (2) and the N output gates (122, 126, 127) being connected to the various interferometers $I_i$ respectively.

11. Gyroscope (108) according to claim 10, characterised in that it comprises a single coupler (105) comprising N input gates (106, 107) and N output gates (109).

12. Gyroscope (9, 114) according to claim 10, characterised in that the said couplers (4, 5, 145, 146, 147) each have two input (120, 121, 124, 125, 148, 149, 152, 153, 156, 157) gates and two output gates (122, 123, 126, 127, 150, 151, 154. 155, 158, 159) and form a tree structured assembly.

13. Gyroscope (108) according to claim 12, characterised in that it comprises two interferometers ($I_1$, $I_2$) and one coupler (105), the said 1/2, 1/2 coupler (105), sharing power incident on a first input gate (106) connected to the source (1), into two powers transmitted to the two output gates (109) connected to the two interferometers ($I_1$, $I_2$) respectively, each being equal to half of the said incident power, such that the two interferometers ($I_1$, $I_2$) each receive the same light power and that the signals output from the said interferometers ($I_1$, $I_2$) and received by the photodetector (2) are balanced.

14. Gyroscope (9) according to claim 12, characterised in that it comprises three interferometers ($I_1$, $I_2$, $I_3$) and two couplers (4, 5), the first (4) of these couplers having two input gates (120, 121), connected to the said source (1) and the said photodetector (2) respectively, one output gate (122) being connected to a first of the said interferometers ($I_1$) and another output gate (123) being connected to a first input gate (124) of the second coupler (5), the second 1/2, 1/2 coupler (5) having a second input gate (125) connected to the said photodetector (2) and output gates (126, 127) connected to the other two interferometers ($I_2$, $I_3$) respectively, the first 1/3, 2/3 coupler (4) sharing the incident power on the input gate (120) connected to the source in a first power transmitted to the output gate (122) connected to the first interferometer ($I_1$) equal to one third of the said incident power, and in a second power transmitted to the output gate (123) connected to the first input gate (124) of the second coupler (5) equal to two thirds of the incident power, so that the three interferometers ($I_1$, $I_2$, $I_3$) each receive the same light power and the signals output from the said interferometers and received by the photodetector (2) are balanced.

15. Gyroscope (9, 108, 114) according to any one of claims 9 to 14, characterised in that polarizers are inserted between the couplers and interferometers $I_i$.

16. Gyroscope (9, 108, 114) according to any one of claims 9 to 15, characterised in that it is coupled to other gyroscopes.

17. Gyroscope (108) according to claim 16, characterised in that it is coupled to a second gyroscope (108), according to any one of the previous claims through a coupler (162) comprising two input gates (163, 164) and two output gates (165, 166), the two input gates (163, 164) being connected to two light sources (110, 111) respectively of the said gyroscope (108), and the two output gates (165, 166) being connected to the two gyroscopes (108) respectively, and sending optical signals to them.

FIG.1

FIG.2

FIG.3

FIG.4

FIG.5

FIG.6

FIG.7

FIG.8

FIG.9

FIG.10

FIG.11

FIG.12

FIG.13

FIG.14

FIG.15

FIG.16

FIG.17

FIG.18

FIG.19

FIG.20